# EUROPEAN PATENT APPLICATION

(11) **EP 4 745 005 A1**
(43) Date of publication of application: **20.05.2026**
(21) Application number: 25214885.3
(22) Date of filing: 11.11.2025
(51) Int. Cl.: B62D 5/04, B62D 7/02

(54) **GEARBOX FOR ACTIVELY DRIVEN CASTER WHEEL OF A UTILITY VEHICLE**

(30) Priority: 14.11.2024 US 202463720283 P
(71) Applicant: MTD Products Inc, Valley City, OH 44280-2711 (US)
(72) Inventor: MAGGARD, Jay, Valley City, 44280 (US)
(74) Representative: SBD IPAdmin

(57) **Abstract**

Provided is a gearbox for an actively driven caster wheel system, comprising: a housing defining a set of operational surfaces which is its own mirror image, has an input shaft aperture, and has an output shaft aperture; and a transmission engaged with the operational surfaces. The transmission has an input shaft assembly and an output shaft assembly. The input shaft assembly has an input shaft, a set of input shaft bearings, and an input gear. The output shaft assembly has an output shaft, a set of output shaft bearings, and an output gear. The input shaft assembly is installed in the input shaft aperture with the input gear adapted to rotate. The output shaft assembly is installed in the output shaft aperture such that the output gear is adapted to rotate. The input gear is engaged with the output gear such that work is transmitted during operation.

## Description

### FIELD OF DISCLOSURE

This application relates generally to outdoor power equipment, and more specifically to steering control and power transmission employable in connection with outdoor power equipment such as, and without limitation, a utility vehicle

### BACKGROUND

Powered maintenance apparatuses come in a variety of forms. One form of powered maintenance apparatus is powered outdoor maintenance equipment such as, and without limitation, equipment for mowing or a lawn maintenance device. It is not unusual for a powered maintenance apparatus to be of a form steerable by a user riding on the apparatus such as, and without limitation, a riding mower.

Steerable powered maintenance apparatuses sometimes use caster wheels to facilitate steerable engagement with a surface on which it operates or performs, such as a lawn or other outdoor area. A caster wheel typically is oriented about its steer axis by the forces and moments resulting from being driven and being connected to the steer axis by some caster trail. While a conventional caster does orient itself passively, under some circumstances it may be desirable to actively orient the caster wheel by application of a steering torque. It remains desirable to develop methods and apparatus for work transmission usable in association with apparatuses to selectably and automatically apply torque to actively orient the caster wheel of an associated maintenance apparatus.

### SUMMARY

The following presents a simplified summary in order to provide a basic understanding of some example aspects of the disclosure. This summary is not an extensive overview. Moreover, this summary is not intended to identify critical elements of the disclosure nor delineate the scope of the disclosure. The sole purpose of the summary is to present some concepts in simplified form as a prelude to the more detailed description that is presented later.

In various embodiments, the subject disclosure provides a gearbox for an actively driven caster wheel system that can be employed on fuel-powered, electric, or hybrid-powered outdoor power equipment.

A first aspect relates to a gearbox for an actively driven caster wheel system, comprising: a housing defining a set of operational surfaces which is its own mirror image, has an input shaft aperture, and has an output shaft aperture; and a transmission engaged with the operational surfaces. The transmission has an input shaft assembly and an output shaft assembly. The input shaft assembly has an input shaft, a set of input shaft bearings, and an input gear. The output shaft assembly has an output shaft, a set of output shaft bearings, and an output gear. The input shaft assembly is installed in the input shaft aperture with the input gear adapted to rotate. The output shaft assembly is installed in the output shaft aperture such that the output gear is adapted to rotate. The input gear is engaged with the output gear such that work is transmitted during operation.

Another aspect relates to a method of using a gearbox for an actively driven caster wheel system, comprising providing a gearbox for an actively driven caster wheel system; operationally engaging a motor to the input shaft of the gearbox; operationally engaging a steering axis of a caster wheel to the output shaft of the gearbox; transmitting work from the motor to the input shaft of the gearbox; and transmitting work from the output shaft of the gearbox to the steering axis of the caster wheel to steer the caster wheel.

To accomplish the foregoing and related ends, certain illustrative aspects of the disclosure are described herein in connection with the following description and the drawings. These aspects are indicative, however, of but a few of the various ways in which the principles of the disclosure can be employed and the subject disclosure is intended to include all such aspects and their equivalents. Other advantages and features of the disclosure will become apparent from the following detailed description of the disclosure when considered in conjunction with the drawings.

### BRIEF DESCRIPTION OF THE DRAWINGS

The foregoing and other aspects of the present disclosure will become apparent to those skilled in the art to which the present disclosure relates upon reading the following description with reference to the accompanying drawings, in which:
Figure 1 provides an illustration of an example lawn maintenance device for a standing operator with independent caster wheels, according to disclosed embodiments.
Figure 2 includes a depiction of an example lawn maintenance device for a seated operator with independent caster wheels, in further embodiments.
Figure 3 provides an image of an example front-mounted lawn maintenance device for a seated operator and having independent caster wheels, in still other embodiments.
Figure 4 depicts an example mechanical relationship between spin axis and swivel axis of a caster wheel having non-zero caster trail in an embodiment(s).
Figure 5 illustrates an example caster wheel and caster trail with selective motor control in additional embodiments of the present disclosure.
Figure 6 provides an image of an example caster wheel motor drive and motor drive axis according to one or more embodiments.
Figure 7 provides an additional image of the example caster wheel motor drive and motor drive axis from an overhead view.
Figure 8 depicts a further image of the example caster wheel motor drive and motor device axis from an interior view.
Figure 9 illustrates a front perspective of a suspension of a lawn maintenance apparatus with caster wheel selective drive motors in further disclosed embodiments.
Figure 9A depicts an instance of a front suspension of a disclosed maintenance apparatus in one or more embodiments of the present disclosure.
Figure 9B illustrates an example front suspension of a disclosed maintenance apparatus according to additional embodiments.
Figure 10 depicts an overhead view of an example caster wheel with selective drive motor in further embodiments.
Figure 11 illustrates a diagram of an example caster wheel with non-zero caster trail and displacement-minimizing friction force in further disclosed embodiments.
Figure 12A shows an example orientation sensor for a caster wheel to detect rotational position of the caster wheel, in further embodiments.
Figure 12B shows an example orientation sensor for a caster wheel to detect rotational position of the caster wheel, in further embodiments.
Figure 13 depicts a diagram of an example electronic computing environment operable to implement one or more embodiments of the present disclosure.
Figure 14 depicts a block diagram of one non-limiting embodiment of a maintenance apparatus.
Figure 15 illustrates a top view of an associated suspension in conjunction with a first embodiment of a motor and gearbox for an actively driven caster wheel with some features removed for visibility.
Figure 16 is a close up top view of the first embodiment with some features removed for visibility.
Figure 17 is a close up perspective view of the first embodiment with some features of the housing restored.
Figure 18 is another close up perspective view of the first embodiment with some features of the housing restored.
Figure 19 is another close up perspective view of the first embodiment with some features removed for visibility.
Figure 20 is the close up perspective view of the first embodiment with some features restored.
Figure 21 is another close up perspective view of the first embodiment with some features restored.
Figure 22 is wider view of the first embodiment as shown in Figure 21.
Figure 23 is close up sectional view of the bearings from the first embodiment as shown in Figure 22.
Figure 24 is a top perspective view of the first embodiments with some features removed for visibility.
Figure 25 is a top perspective view of the first embodiments with some features restored.
Figure 26 is a front view of the first embodiments with features as shown in Figure 25.
Figure 27 is a perspective view of a second embodiment of a motor and gearbox for an actively driven caster wheel with some features removed for visibility.
Figure 28 is a top view of a second embodiment of Figure 27.

It should be noted that the drawings are diagrammatic and not drawn to scale. Relative dimensions and proportions of parts of the figures may have been shown exaggerated or reduced in size for the sake of clarity and convenience in the drawings. The same reference numbers are generally used to refer to corresponding or similar features in the different embodiments, except where clear from context that same reference numbers refer to disparate features. Accordingly, the drawings and description are to be regarded as illustrative in nature and not as restrictive.

While embodiments of the disclosure pertaining to providing a gearbox for an actively driven caster wheel system for an outdoor power equipment are described herein, it should be understood that the disclosed machines, electronic and computing devices and methods are not so limited and modifications may be made without departing from the scope of the present disclosure. The scope of the systems, methods, and electronic and computing devices for providing and/or controlling a gearbox for an actively driven caster wheel system are defined by the appended claims, and all devices, processes, and methods that come within the meaning of the claims, either literally or by equivalence, are intended to be embraced therein.

### DETAILED DESCRIPTION

Example embodiments that incorporate one or more aspects of the present disclosure are described and illustrated in the drawings. These illustrated examples are not intended to be a limitation on the present disclosure. For example, one or more aspects of the present disclosure can be utilized in other embodiments and even other types of devices. Moreover, certain terminology is used herein for convenience only and is not to be taken as a limitation on the present disclosure. Still further, in the drawings, the same reference numerals are employed for designating the same elements.

As utilized herein, relative terms or terms of degree such as approximately, substantially or like relative terms such as about, roughly and so forth, are intended to incorporate ranges and variations about a qualified term reasonably encountered by one of ordinary skill in the art in fabricating, compiling or optimizing the embodiments disclosed herein to suit design preferences, where not explicitly specified otherwise. For instance, a relative term can refer to ranges of manufacturing tolerances associated with suitable manufacturing equipment (e.g., injection molding equipment, extrusion equipment, metal stamping equipment, and so forth) for realizing a mechanical structure from a disclosed illustration or description. In some embodiments, depending on context and the capabilities of one of ordinary skill in the art, relative terminology can refer to a variation in a disclosed value or characteristic; e.g., a 0 to five-percent variance or a zero to ten-percent variance from precise mathematically defined value or characteristic, or any suitable value or range there between can define a scope for a disclosed term of degree. As examples, a component can be rotated through a disclosed angle or substantially the disclosed angle, such as the disclosed angle with a variance of 0 to five-percent or 0 to ten-percent; a disclosed mechanical dimension can have a variance of suitable manufacturing tolerances as would be understood by one of ordinary skill in the art, or a variance of a few percent about the disclosed mechanical dimension that would also achieve a stated purpose or function of the disclosed mechanical dimension. These or similar variances can be applicable to other contexts in which a term of degree is utilized herein such as accuracy of measurement of a physical effect (e.g., a motor speed, a wheel angle, etc.) or the like.

The following terms are used throughout the description, the definitions of which are provided herein to assist in understanding various aspects of the subject disclosure.

As used in this application, the terms "outdoor power equipment", "outdoor power equipment machine", "power equipment", "maintenance machine" and "power equipment machine" are used interchangeably and are intended to refer to any of robotic, partially robotic ride-on, manually operated ride-on, walk-behind, autonomous, semi-autonomous (e.g., user-assisted automation), remote control, or multi-function variants of any of the following: powered carts and wheel barrows, motorized or non-motorized trailers, lawn mowers, lawn and garden tractors, cars, trucks, go-karts, scooters, buggies, powered four-wheel riding devices, powered three-wheel riding devices, lawn trimmers, lawn edgers, lawn and leaf blowers or sweepers, hedge trimmers, pruners, loppers, chainsaws, rakes, pole saws, tillers, cultivators, aerators, log splitters, post hole diggers, trenchers, stump grinders, snow throwers (or any other snow or ice cleaning or clearing implements), lawn, wood and leaf shredders and chippers, lawn and/or leaf vacuums, pressure washers, lawn equipment, garden equipment, driveway sprayers and spreaders, and sports field marking equipment. Operator controlled vehicles can also be implemented in conjunction with various embodiments of the present disclosure directed to apparatuses and methods for selective active caster steering.

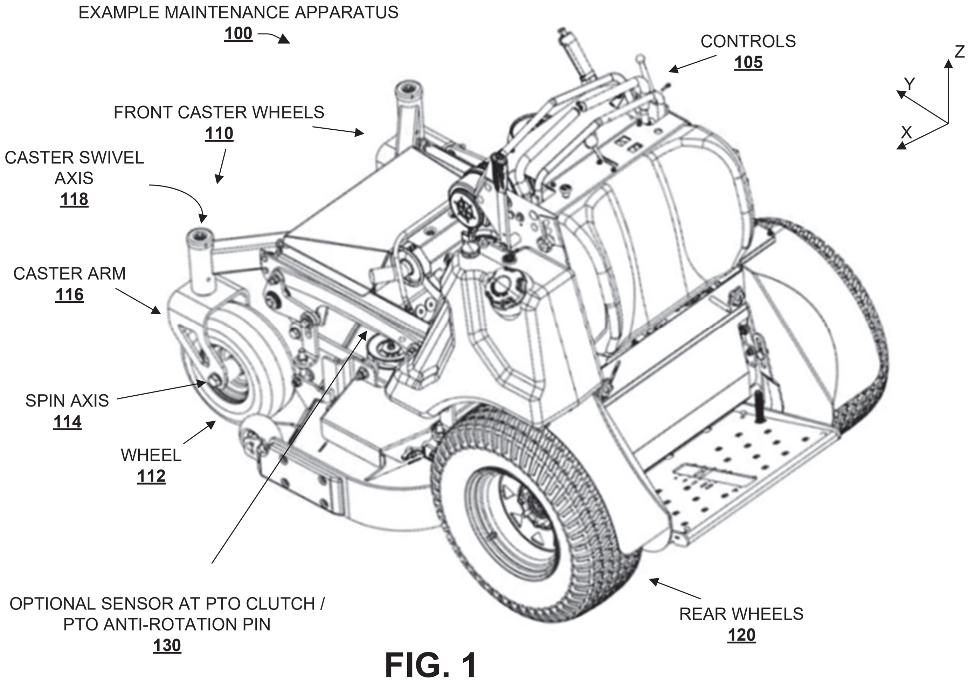

Figure 1 illustrates a diagram of an example maintenance apparatus 100 according to one or more embodiments of the present disclosure. Without limitation, a maintenance apparatus 100 can be a standing operator device in which an operator can stand on a rear portion of maintenance apparatus 100 to access controls 105 of maintenance apparatus 100 including to drive, steer and otherwise control maintenance apparatus 100. In some non-limiting embodiments, such as the non-limiting example of Fig. 1, maintenance apparatus 100 may be a powered maintenance apparatus driven by an engine, a motor, or otherwise as chosen with good engineering judgment and as described further below.

Maintenance apparatus 100 includes rear wheels 120 and front caster wheels 110 secured to a frame of maintenance apparatus 100. Rear wheels 120 can be drive wheels, in one or more embodiments, that are powered by a power source (not depicted) that provides mechanical power to rear wheels 120 with some drive unit(s). The power source can be a combustion engine, in an embodiment, including a transmission system that distributes mechanical power from the combustion engine to rear wheels 120. In other embodiments, the power source can supply power to one or more drive units that comprise one or more hydraulic motors that supply mechanical power to rear wheels 120. As an example, a single hydraulic motor and a transmission system can distribute mechanical power to rear wheels 120. In other embodiments a first drive unit is a first hydraulic motor adapted to supply mechanical power to a first rear wheel of the rear wheel 120, and a second drive unit is a second hydraulic motor adapted to supply mechanical power to a second of the rear wheels 120 and to a second rear wheel of the rear wheels 120. In still further embodiments, the power source can be one or more electric motors that supply mechanical power to rear wheels 120. For instance, a single electric motor and a transmission system can distribute mechanical power to rear wheels 120, or as an alternative, a first electric motor and a second electric motor can supply mechanical power to the first of the rear wheels 120 and to the second of the rear wheels 120, respectively.

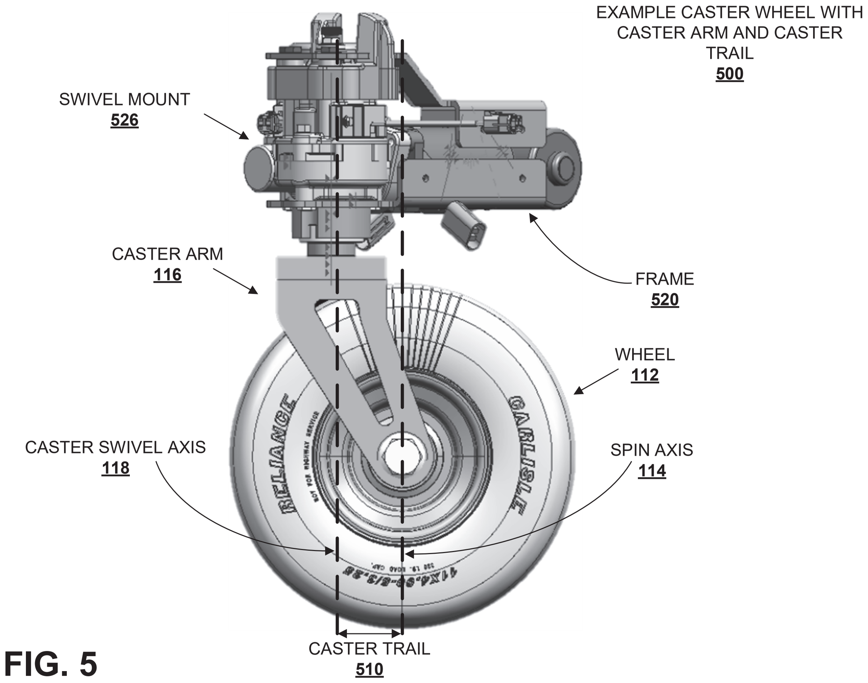

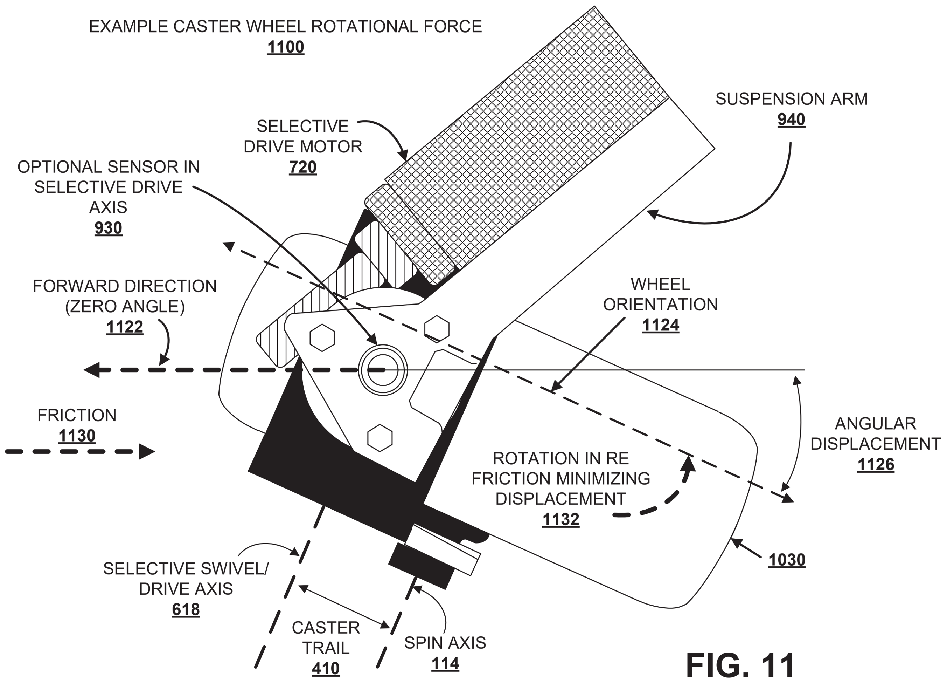

Front caster wheels 110 of maintenance apparatus 100 can be secured to the frame thereof at least in part by way of a caster swivel axis 118. In the embodiment illustrated by Figure 1, caster swivel axis 118 permits rotation of a caster arm 116 and wheel 112 of front caster wheels 110 about an axis perpendicular to or substantially perpendicular to a surface upon which maintenance apparatus 100 is supported (see also Figure 11, *infra*)*.* Additionally, caster arm 116 includes a spin axis 114 facilitating rotation of wheel 112 within caster arm 116. In the embodiment illustrated by Figure 1, caster swivel axis 118 can be defined by a lubricated bearing, pin, rod, or the like, that affords minimal or reduced resistance to rotation, allowing caster arm 116 and wheel 112 to rotate in response to motion of maintenance apparatus 100 (*e.g.,* see Figure 5, *infra*)*.*

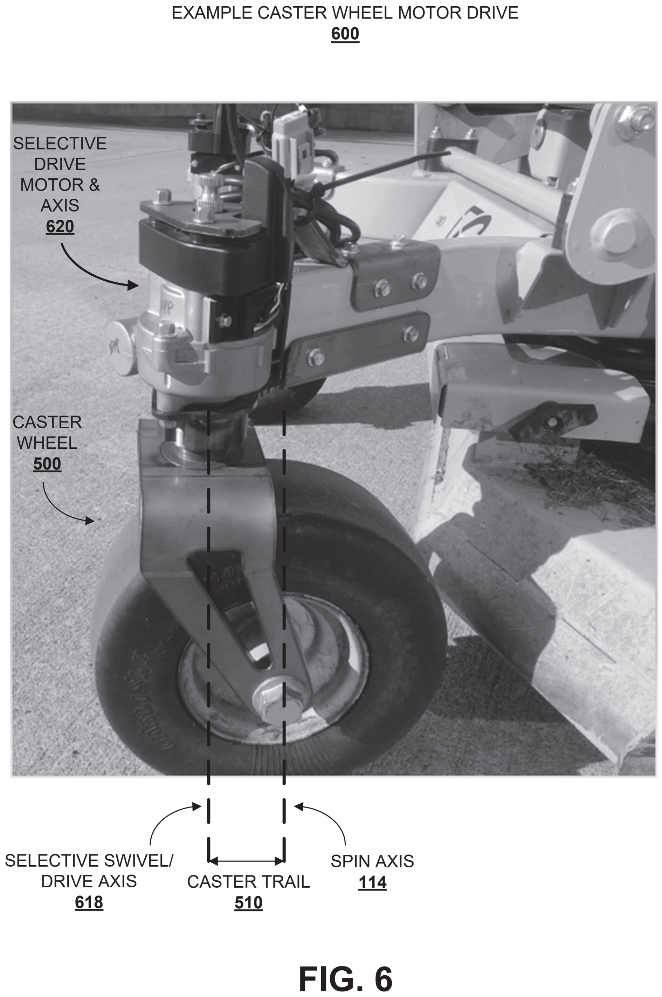

With additional reference to Figure 6, in various embodiments, a caster steering unit 1432, such as a motor (*e.g*., electric motor, hydraulic motor, or otherwise as chosen with good engineering judgment), can be connected to caster swivel axis 118 to apply an active torque on caster swivel axis 118 to, at least in part, effect directional control over wheel 112 (see Figures 6-11, *infra*)*.* The active torque applied by the caster steering unit 1432 can be in addition to a friction torque applied to caster arm 116 in response to movement of maintenance apparatus 100 (see Figure 11, *infra*), and can be in the same (vector) direction or in an opposite (vector) direction as the friction torque. The active torque can be applied by the caster steering unit 1432 upon being activated as described herebelow, such that when deactivated no active torque is applied to caster swivel axis 118 and when activated the active torque is applied to caster swivel axis 118.

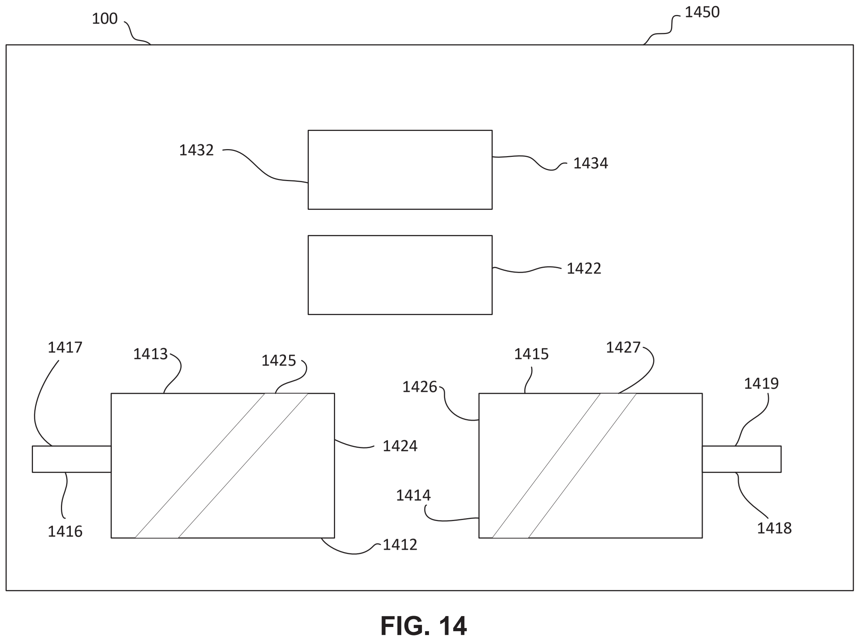

With additional reference to Fig. 14, in some embodiments, the active torque applied to the caster wheel can be activated or deactivated, manually by an associated operator or user of maintenance apparatus 100 by way of controls 105; or by an automated process; or by a combination thereof. In some aspects, the latter automated process may be conducted using a selective active caster steering apparatus 1450. In a first exemplary and non-limiting embodiment a selective active caster steering apparatus 1450 for a maintenance apparatus 100 may automatically determine and apply an amount of active torque to the caster wheel 112 about the caster swivel axis 118. In some non-limiting aspects, a selective active caster steering apparatus 1450 for a maintenance apparatus 100 having a first drive unit 1412 and a second drive unit 1414, the selective active caster steering apparatus 1450 may comprise a first caster arm 116 defining a first caster swivel axis 118 and a first caster spin axis 114. In this latter first exemplary embodiment, the selective active caster steering apparatus 1450 may further comprise a first caster wheel 112 operationally engaged with the first caster arm 116 such that the first caster wheel 112 is adapted to be steered about the first caster swivel axis 118. In this latter first exemplary embodiment, the selective active caster steering apparatus 1450 may further comprise a first caster steering unit 1432, such as and without limitation selective drive motor 720, adapted to selectably apply an amount of active torque to the first caster wheel 112 about the first caster swivel axis 118 as indicated by a first formula. In this latter first exemplary embodiment, the first formula may determine the amount of active torque to output as a first function of one or more measured parameters. In this latter first exemplary embodiment, the one or more measured parameters may include: a) a measurement at an input to the first drive unit 1412 of a mechanical performance parameter; b) a measurement at an input to the second drive unit 1414 of a mechanical performance parameter; c) a measurement at an output from the first drive unit 1412 of a mechanical performance parameter; d) a measurement at an output from the second drive unit 1414 of a mechanical performance parameter; e) differences in measurements at respective inputs of a first drive unit 1412 and a second drive unit 1414 of a mechanical performance parameter; f) differences in measurements at respective outputs of a first drive unit 1412 and a second drive unit 1414 of a mechanical performance parameter; g) mechanical power measurement at a powered implement 1422 of the maintenance apparatus 100; h) a measured torque upon the maintenance apparatus 100; i) time; or some combination of two or more of the latter measured parameters. These latter mechanical performance parameters may include one or more of any of the following: force, torque, energy, work, power, action, position, velocity, acceleration, jerk, angular position, angular velocity, angular acceleration, angular jerk, temperature, pressure, heat, mass, or mass flow rate.

In some aspects of the first exemplary and non-limiting embodiment of a selective active caster steering apparatus 1450, the first drive unit 1412 may be a first hydraulic drive motor 1413. In some aspects of the first exemplary and non-limiting embodiment of a selective active caster steering apparatus 1450, the second drive unit 1414 may be a second hydraulic drive motor 1415. In some aspects of the first exemplary and non-limiting embodiment of a selective active caster steering apparatus 1450, the first caster steering unit 1432 comprises a first hydraulic caster motor 1434.

In some aspects of the first exemplary and non-limiting embodiment of a selective active caster steering apparatus 1450, the first function is a function with one or more measured parameters being the independent variables of the first function. In some aspects of the first exemplary and non-limiting embodiment of a selective active caster steering apparatus 1450, the first function is continuously differentiable over each of the one or more measured parameters that are the independent variables of the first function. Herein and unless otherwise noted, "continuously differentiable" has the conventional mathematical definition: a function g(x) is continuously differentiable if the derivative g'(x) exists and is itself a continuous function. It should be understood that the relevant domain of x in the latter definition is the relevant measureable range of the relevant measured parameter that is the independent variable x. In some aspects of the first exemplary and non-limiting embodiment of a selective active caster steering apparatus 1450, the first function is a linear equation, a quadratic equation, a cubic equation, or some other polynomial equation. It should be understood that it also contemplated that the first function may include other equations and terms such as those that are logarithmic, geometric, or include other exponents.

In some aspects of the first exemplary and non-limiting embodiment of a selective active caster steering apparatus 1450, the first function is a function h(p₁, p₂) = k(pi - p₂), where k is a constant of proportionality, p₁ is the measurement of torque at the first drive unit 1412, and p₂ is the measurement of torque at the second drive unit 1414. It should be understood that the latter non-limiting exemplary function h determines an amount of active torque to the first caster wheel 112 about the first caster swivel axis 118 and that h is linearly proportional to the torque differential, where the torque differential is the difference in measurements of torque at the first drive unit 1412 and the second drive unit 1414.

In another aspect of the first exemplary and non-limiting embodiment of a selective active caster steering apparatus 1450, the first function is a function h(p₁, p₂, p₃, p₄) wherein p₁ is the measurement of torque at the first drive unit 1412, p₂ is the measurement of torque at the second drive unit 1414, p₃ is the measurement of angular velocity of a shaft of the first hydraulic motor 1412, and p₄ is the measurement of angular velocity of a shaft of the second hydraulic motor. As in the prior example above, the measurement of torque at the first drive unit 1412, p₂ is the measurement of torque at the second drive unit 1414 may be used to calculate the torque differential as part of the first function.

It should be understood that in the above examples the measurements of torque may be measured at either the input or the output of the respective drives as chosen with good engineering judgment. It should further be understood that constant k may be predetermined or may be an input determined simultaneously. In one non-limiting aspect constant k is determined beforehand, or calculated beforehand or simultaneously as the output of a second function.

Further to the above, and with reference to the Figures and particularly to FIGS. 1, 2, 3, 13, and 14, provided is a first exemplary and non-limiting embodiment of a powered maintenance apparatus 100 comprising: a first drive unit 1412 having a first drive shaft 1417, the first drive unit being adapted to produce a first mechanical output by way of the first drive shaft 1417 as shaft work; a second drive unit 1414 having a second drive shaft 1418, and adapted to produce a second mechanical output by way of the second drive shaft 1418 as shaft work; one or more sensors 130 operatively engaged with the maintenance apparatus, each of the one or more sensors 130 being adapted measure a parameter and to output data indicative of the parameter measured; a controller 1304, and a selective active caster steering apparatus operationally engaged with the powered maintenance apparatus. The controller 1304 may be adapted to process a first formula based on data from the one or more sensors, calculate the result of the first formula, and to send a first signal based thereon. The latter first formula is usable to determine the latter first signal indicative of an amount of active torque to be applied to the caster wheel about the caster swivel axis as a first function of one or more parameters measured by the one or more sensors. Further to the above and without limitation the first drive unit 1412 may be an engine, an electric motor, a hydraulic motor, or other unit chosen with good engineering judgment and capable of producing the desired first mechanical output. Similarly, the second drive unit 1414 may be an engine, an electric motor, a hydraulic motor, or other unit chosen with good engineering judgment and capable of producing the desired second mechanical output. The above referenced sensors 130 may comprise an accelerometer, a gyroscopic transducer, a timer, a clock, a strain gauge, a pressure transducer, a flow gauge, a mass flow transducer, a thermometer, a calorimeter, a voltage transducer, a magnetic field transducer, or otherwise as chosen with good engineering judgment. Similar to that noted above with respect to the selective active caster steering apparatus 1450, the one or more parameters measured by the one or more sensors may comprise: a) a measurement at an input to the first drive unit 1412 of a mechanical performance parameter; b) a measurement at an input to the second drive unit 1414 of a mechanical performance parameter; c) a measurement at an output from the first drive unit 1412 of a mechanical performance parameter; d) a measurement at an output from the second drive unit 1414 of a mechanical performance parameter; e) differences in measurements at respective inputs of a first drive unit 1412 and a second drive unit 1414 of a mechanical performance parameter; f) differences in measurements at respective outputs of a first drive unit 1412 and a second drive unit 1414 of a mechanical performance parameter; g) mechanical power measurement at a powered implement 1422 of the maintenance apparatus 100; h) a measured torque upon the maintenance apparatus 100; i) time; or some combination of two or more of the latter measured parameters. Here again, these latter mechanical performance parameters may include one or more of any of the following: force, torque, energy, work, power, action, position, velocity, acceleration, jerk, angular position, angular velocity, angular acceleration, angular jerk, temperature, pressure, heat, mass, or mass flow rate. Similar to that noted above, the selective active caster steering apparatus 1450 may have: a caster arm defining the caster swivel axis and a caster spin axis; the caster wheel may be operationally engaged with the caster arm such that the caster wheel can be steered about the caster swivel axis; and a first caster steering unit adapted to selectably apply the amount of active torque indicated by the first signal to the caster wheel about the caster swivel axis.

In some aspects of the first exemplary and non-limiting embodiment of a powered maintenance apparatus 100, the first drive unit 1412 may be a first hydraulic drive motor 1413. In some aspects of the first exemplary and non-limiting embodiment of a powered maintenance apparatus 100, the second drive unit 1414 may be a second hydraulic drive motor 1415. In some aspects of the first exemplary and non-limiting embodiment of a powered maintenance apparatus 100, the first caster steering unit 1432 comprises a first hydraulic caster motor 1434.

In some aspects of the first exemplary and non-limiting embodiment of a powered maintenance apparatus 100, the first function is a function with one or more measured parameters being the independent variables of the first function. In some aspects of the first exemplary and non-limiting embodiment of a powered maintenance apparatus 100, the first function is continuously differentiable over each of the one or more measured parameters that are the independent variables of the first function. As above, here, "continuously differentiable" has the conventional mathematical definition: a function g(x) is continuously differentiable if the derivative g'(x) exists and is itself a continuous function. It should be understood that the relevant domain of x in the latter definition is the relevant measureable range of the relevant measured parameter that is the independent variable x. In some aspects of the first exemplary and non-limiting embodiment of a powered maintenance apparatus 100, the first function is a linear equation, a quadratic equation, a cubic equation, or some other polynomial equation. Here again, it should be understood that it also contemplated that the first function may include other equations and terms such as those that are logarithmic, geometric, or include other exponents.

Similar to that above, in some aspects of the first exemplary and non-limiting embodiment of a powered maintenance apparatus 100, the first function is a function h(p₁, p₂) = k(p₁ - p₂) where k is a constant of proportionality, p₁ is the measurement of torque at the first drive unit 1412, and p₂ is the measurement of torque at the second drive unit 1414. It should be understood that the latter non-limiting exemplary function h determines an amount of active torque to the first caster wheel 112 about the first caster swivel axis 118 and that h is linearly proportional to the torque differential, where the torque differential is the difference in measurements of torque at the first drive unit 1412 and the second drive unit 1414.

Similar to that above, in another aspect of the first exemplary and non-limiting embodiment of a powered maintenance apparatus 100, the first function is a function h(p₁, p₂, p₃, p₄) wherein p₁ is the measurement of torque at the first drive unit 1412, p₂ is the measurement of torque at the second drive unit 1414, p₃ is the measurement of angular velocity of a shaft of the first hydraulic motor 1412, and p₄ is the measurement of angular velocity of a shaft of the second hydraulic motor. As in the prior example above, the measurement of torque at the first drive unit 1412, p₂ is the measurement of torque at the second drive unit 1414 may be used to calculate the torque differential as part of the first function.

It should be understood that in the above examples the measurements of torque may be measured at either the input or the output of the respective drives as chosen with good engineering judgment. It should further be understood that constant k may be predetermined or may be an input determined simultaneously. In one non-limiting aspect constant k is determined beforehand, or calculated beforehand or simultaneously as the output of a second function.

Further to the above, and with reference to the Figures and particularly to FIGS. 1, 2, 3, 13, and 14, provided is a first exemplary and non-limiting embodiment of a method of providing steering force in a powered maintenance apparatus 100. The method comprises providing a powered maintenance apparatus 100 having: a first drive unit 1412 having a first drive shaft 1417 and adapted to produce a first mechanical output 1416; a second drive unit 1414 having a second drive shaft 1418, and adapted to produce a second mechanical output 1419; one or more sensors 130 operatively engaged with the maintenance apparatus 100, each of the one or more sensors 130 being adapted to measure a parameter and to output data indicative of the parameter measured; a controller adapted to process a first formula based on data from the one or more sensors, calculate the result of the first formula, wherein the first formula is usable to determine a first signal indicative of an amount of active torque, and send the first signal; and a selective active caster steering apparatus operationally engaged with the powered maintenance apparatus. The method further comprises measuring a parameter with each of the one or more sensors; outputting data indicative of the parameter from each of the one or more sensors to the controller; using the controller to calculate a first signal based on the parameter from each of the one or more sensors; and sending the first signal to the first caster steering unit. In the latter exemplary method, the selective active caster steering apparatus 150 operationally engaged with the powered maintenance apparatus, has a caster arm defining a caster swivel axis and a caster spin axis; a caster wheel operationally engaged with the caster arm such that the caster wheel can be steered about the caster swivel axis; and a first caster steering unit adapted to selectably apply the amount of active torque indicated by the first signal to the caster wheel about the caster swivel axis. It should be understood then that in the latter exemplary method, the first signal indicative of an amount of active torque is indicative of an amount of active torque to be applied to the caster wheel about the caster swivel axis. In the latter exemplary method, the first formula is usable to determine the first signal as a first function of one or more parameters measured by the one or more sensors 130. The one or more parameters may include: a) a measurement at an input to the first drive unit of a mechanical performance parameter; b) a measurement at an input to the second drive unit of a mechanical performance parameter; c) a measurement at an output from the first drive unit of a mechanical performance parameter; d) a measurement at an output from the second drive unit of a mechanical performance parameter; e) differences in measurements at respective inputs of a first drive unit and a second drive unit of a mechanical performance parameter; f) differences in measurements at respective outputs of a first drive unit and a second drive unit of a mechanical performance parameter; g) mechanical power measurement at a powered implement of the maintenance apparatus; h) a measured torque upon the maintenance apparatus; i) time; or a combination thereof. In accordance with the foregoing, the method may further comprise using the first caster steering unit to output the amount of active torque indicated by the first signal to the caster wheel about the caster swivel axis to provide steering force to the powered maintenance apparatus.

In some non-limiting embodiments of the above method, the first function may be continuously differentiable over each of the one or more measured parameters.

In some non-limiting aspects of the above embodiments, the apparatus and/or method are such that the recited first drive unit 1412 is a first axial hydraulic motor 1424 comprising a first swashplate 1425 of the kind typical to such motors; and the recited second drive unit 1414 is a second axial hydraulic motor 1426 comprising a second swashplate 1427 of the kind typical to such motors. In such an embodiment, one or more sensors 130 may be operationally engaged with the first swashplate 1425 and the second swashplate 1427 to provide, respectively, a measurement at an output from the first drive unit 1412 of torque (which is a mechanical performance parameter) and a measurement at an output from the second drive unit 1414 of torque. These latter torque measurements, n1, n2, may be the input parameters to the first function where the first function is f(x) = k(n1 - n2) and k is some constant. Alternatively, k may itself be calculated from a second function. In some aspects where k is calculated from a second function, k may be set to zero or a very small value if the second function is in a range consistent with one or both of the drive units, 1412, 1414 or their associated drive wheels being in a slip condition, for example and without limitation, if a sensor were to detect a drive shaft angular acceleration above some threshold value. In other aspects where k is calculated from a second function, k may be set to zero or a very small value if sensors provide values of drive wheel rotation rates and vehicle motion that are different from those values projected for non-slip wheel performance by more than one or more threshold values.

With reference now to Figures 1-13, additional details and non-limiting embodiments are set out below.

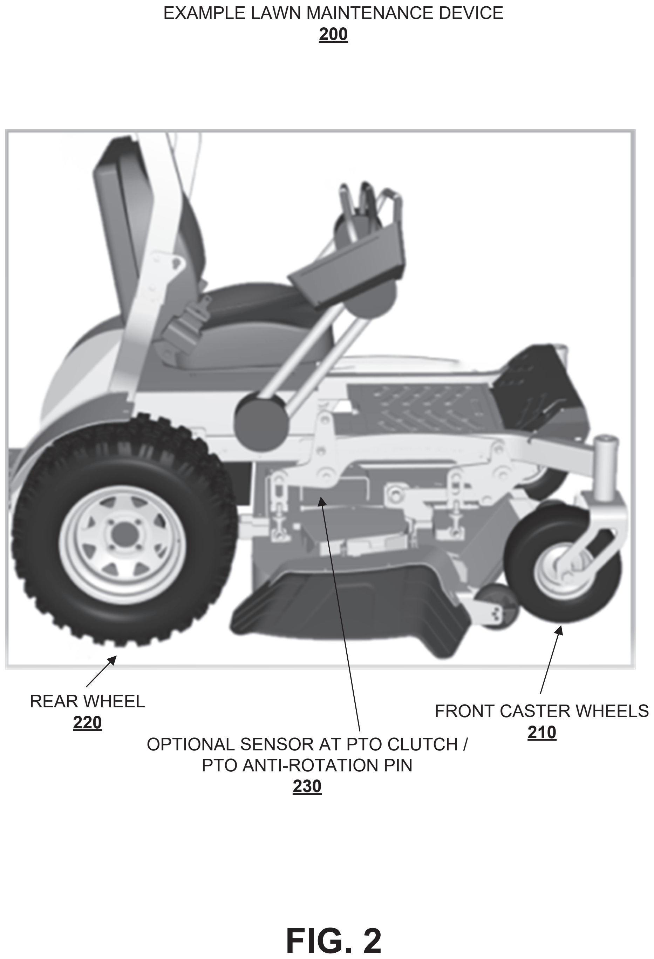

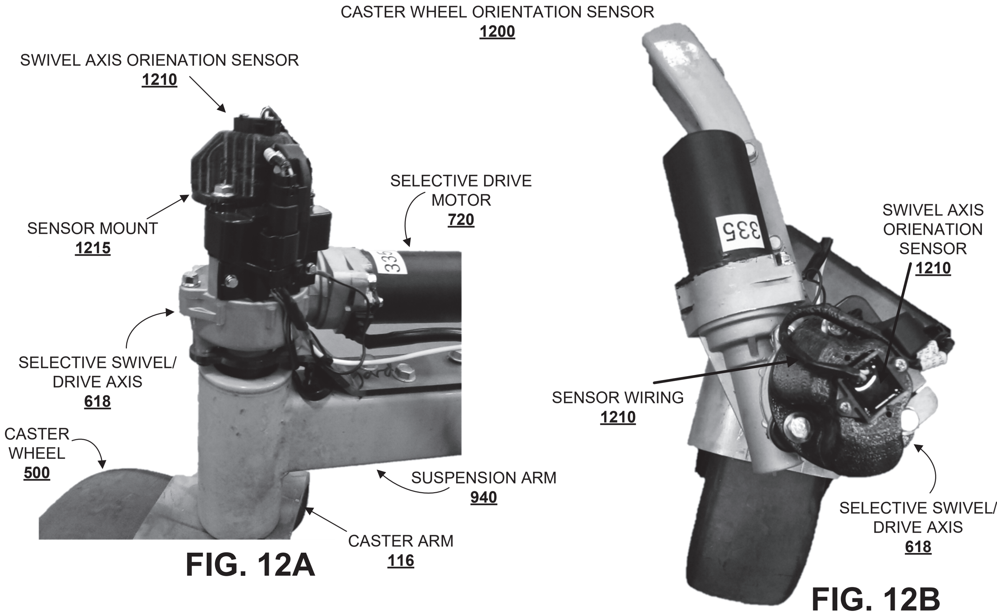

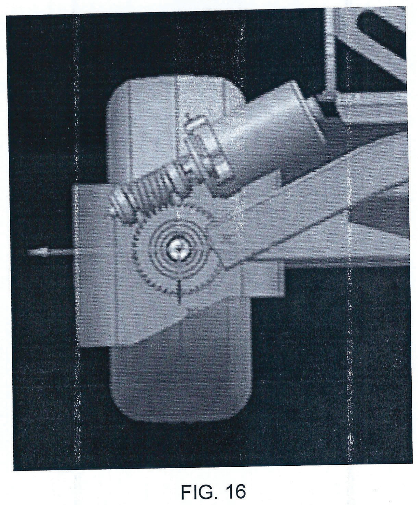

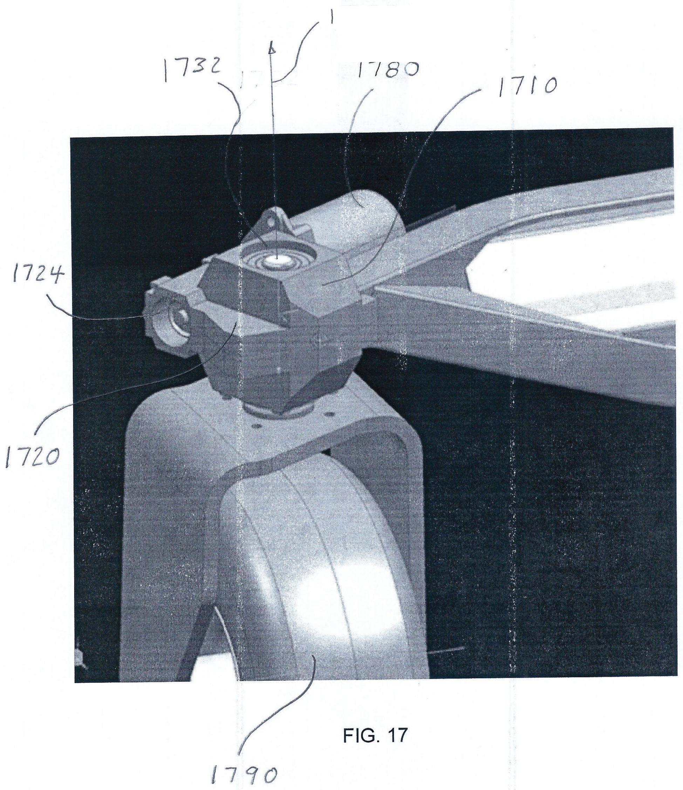

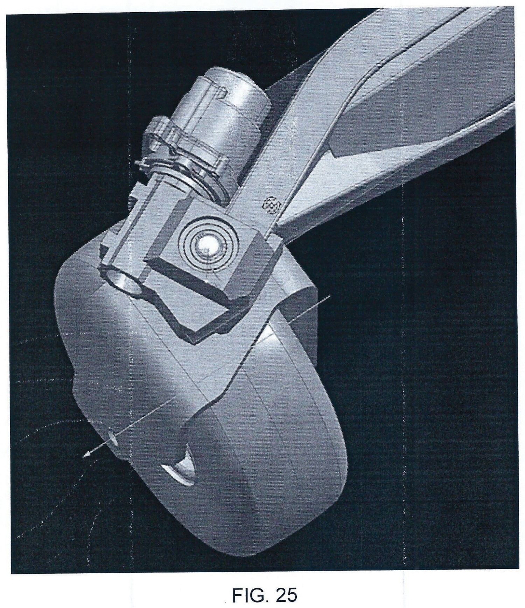

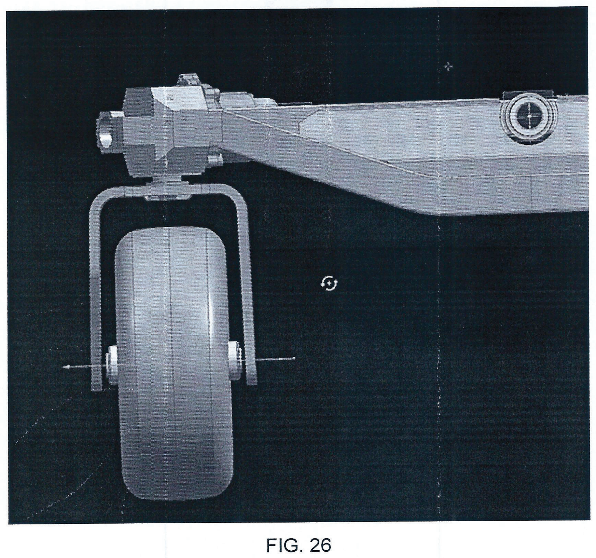

Figure 2 depicts a diagram of an example lawn maintenance apparatus 200 according to further embodiments of the present disclosure. Lawn maintenance apparatus 200 illustrates a seated operator device in which an operator can drive, operate and control lawn maintenance apparatus 200 from a seated position. Lawn maintenance apparatus 200 comprises a front caster wheel(s) 210 and rear wheels 220. Caster wheel(s) 210 can rotate freely about a rotation axis at a connection to a frame of lawn maintenance apparatus 200. In addition, rear wheels 220 can be driven by one or more motors or engines secured to the frame of lawn maintenance apparatus 200. Although not depicted in Fig. 2 (but see Figures 6-11, 15-17, and 25-28 *infra*), lawn maintenance apparatus 200 can comprise one or more motors connected to front caster wheels in order to apply a torque on the rotation axis of the caster wheel(s) 210 and at least in part control direction of motion of lawn maintenance apparatus 200 from the front caster wheel(s) 210. In an embodiment, the one or more motors can apply the torque on the rotation axis in response to a force upon a component of lawn maintenance apparatus 200. To this end, a sensor 230 can optionally be provided to measure the force upon the component of lawn maintenance apparatus 200 to provide a measurement of the force to a controller (not depicted in Fig. 2, but see Fig. 12A, 12B, 27, and 28 *infra*) operable to control the one or more motors.

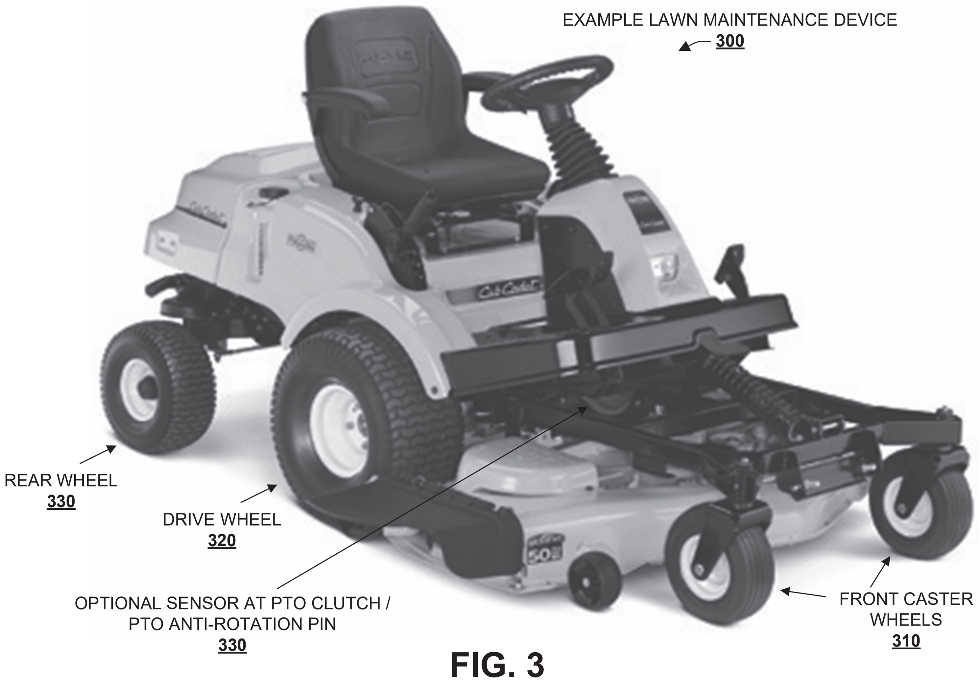

Figure 3 depicts a diagram of a lawn maintenance device 300 according to further embodiments of the present disclosure. Lawn maintenance device 300 provides another embodiment of a maintenance apparatus having a front-mount mow deck. Further, lawn maintenance device 300 is a seated operator apparatus enabling an operator to drive, operate and control lawn maintenance apparatus 300 from a seated position. Lawn maintenance apparatus 300 also includes a set of front caster wheels 310 secured to a frame supporting the front-mount mow deck. One or more drive wheels 320 are provided, as well as a rear wheel(s) 330. Rear wheel(s) 330 can be a passive wheel(s) in some embodiments, or can be a steerable wheel in other embodiments. Similarly, drive wheels 320 can be constrained to move at the same speed (with steering controlled by rear wheel(s) 330 or front caster wheels 310) or can operate at different speeds to effect directional control (and steering) of lawn maintenance device 300.

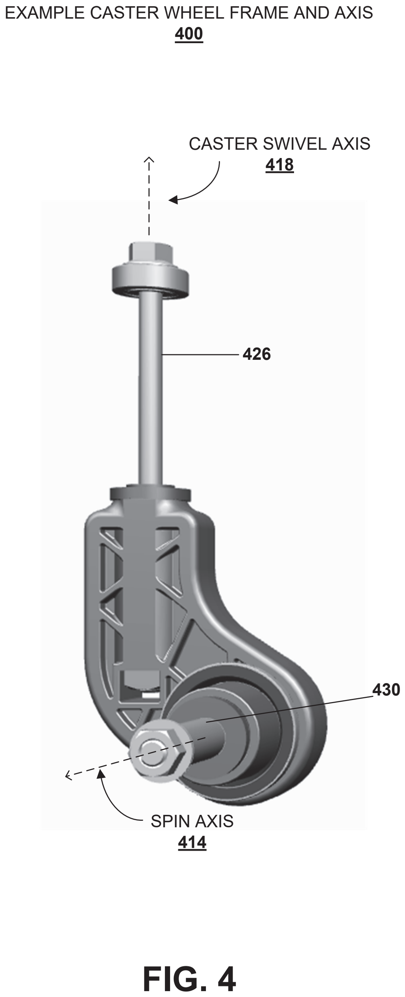

Figure 4 illustrates an example diagram of a caster wheel frame and axis 400 according to alternative embodiments of the present disclosure. Caster wheel frame and axis 400 is one illustrative mechanism by which disclosed caster wheels can be implemented and is not intended to be limiting. In the embodiment depicted by Figure 4, caster wheel frame and axis 400 includes a caster swivel axis 418 and a spin axis 414. Caster swivel axis 418 includes a mounting rod 426 to secure caster wheel frame and axis 400 to a maintenance apparatus. Caster wheel frame and axis 400 can rotate about caster swivel axis 418 to facilitate rotation of caster wheel frame and axis 400 about the mounting rod 426 and a frame of the maintenance apparatus. A wheel mount 430 is provided about spin axis 414 to mount a wheel (not depicted) to caster wheel frame and axis 400. The wheel can rotate on wheel mount 430 to spin about spin axis 414. A distance between the spin axis 414 and caster swivel axis 418 can define a caster trail (not depicted, but see Figure 5, *infra*)*.* The caster trail facilitates a frictional force on a caster wheel about caster swivel axis 418 that reduces an angular displacement between a direction of motion and a rotation of caster swivel axis 418, in one or more embodiments (*e.g.,* see Figures 5 and 11, *infra*)*.*

Figure 5 depicts an example diagram of a caster wheel 500 according to further embodiments of the present disclosure. Caster wheel 500 comprises a wheel 112 secured to a caster arm 116. The caster arm 116 secures the wheel 112 to a frame 520 of a maintenance apparatus 520 by way of a swivel mount 526. Swivel mount 526 facilitates rotation of caster arm 116 about a caster swivel axis 118, while caster arm 116 provides a mount for wheel 112 to spin about a spin axis 114. A distance between caster swivel axis 118 and spin axis 114 defines a caster trail 510 of caster wheel 500. In at least one alternative embodiment, however, a disclosed caster wheel can have zero caster trail, in which the spin axis 114 and caster swivel axis 118 are collinear or substantially collinear such that caster trail 510 is zero (or substantially zero).

Caster trail 510 can facilitate application of a rotational force on caster arm 116 in response to motion of wheel 112. For instance, a force upon frame 520 (*e.g.,* supplied by a power source and a drive wheel of a disclosed maintenance apparatus) is translated to caster arm 116 by way of swivel mount 526 and to wheel 112 at the mount to spin axis 114. The force can in turn result in a rotational force proportional to a distance of caster trail 510 upon wheel 112 and caster arm 116 about caster swivel axis 118. This rotational force is in a direction that minimizes angular displacement between a direction of the force upon frame 520 and an orientation of caster arm 116 about caster swivel axis 118 (see Figure 11, *infra*)*.* By minimizing the angular displacement, the rotational force reduces drag and promotes rotation of wheel 112 along a surface in response to the force upon frame 520, mitigating or avoiding turfing of the surface.

Figure 6 illustrates an image of an example caster wheel motor drive 600 according to further embodiments of the present disclosure. A caster wheel 500 is mechanically coupled to a selective drive motor and axis 620 facilitating rotation about a selective swivel/drive axis 618. Selective drive motor and axis 620 can include a motor responsive to an electric control signal. The motor can be passive (*e.g*., inactivated) and provide no (driven) force upon caster wheel 500 about the selective swivel / drive axis 618, when passive. In response to the electric control signal, the motor can activate to provide the force upon selective swivel / drive axis 618 to facilitate rotation of caster wheel 500 about the selective swivel / drive axis 618. In an embodiment, the selective swivel/drive axis 618 of selective drive motor and axis 620 can have an axial friction opposing rotation of caster wheel 500 about selective swivel / drive axis 618. The axial friction can be present even when the motor is passive (*e.g*., deactivated, receiving a default or minimal electric power, receiving no electric power, and so forth), in various embodiments. However, the rotation force proportional to caster trail 510 in response to movement of the maintenance apparatus can be effective to overcome the axial friction, in one or more embodiments. When activated, the motor of selective drive motor and axis 620 can have an output magnitude selected to overcome the axial friction of selective swivel / drive axis 618 and to orient the caster wheel 500 to a target direction, or to overcome the axial friction in addition to opposing a measured force upon a maintenance apparatus disclosed herein. In at least some embodiments, the drive axis of selective drive motor and axis 620 can be a lubricated rotational axis having negligible axial friction, and the output magnitude can be selected to orient the caster wheel 500 to the target direction, or the oppose the measured force without the magnitude selected to overcome the axial friction.

In some aspects of disclosed embodiments, selective drive motor and axis 620 can be operated in a low power mode to provide active dampening of rotation of caster wheel 500 about selective swivel/drive axis 618. The lower power model can be selected to apply less rotational force than required to initiate rotation of caster wheel 500 about selective swivel/drive axis 618 in view of mass of caster wheel 500, any rotational friction of selective swivel/drive axis 618 and force exerted on caster wheel 500 by the mass of a maintenance apparatus and frame that caster wheel 500 is secured to. Instead, the low power mode can be selected to apply a rotational force sufficient to mitigate rotation of caster wheel 500 about selective swivel/drive axis 618 in response to other forces (*e.g.,* caster trail friction, gravitational force, and so on). In at least one aspect the magnitude of lower power rotational force can be adjustable by way of controls 105 (*e.g.,* see Figure 1, *supra*). In additional aspects, the low power mode can be implemented at a selective drive motor and axis 620 connected to a single caster wheel 500, or to both selective drive motor and axis 620 connected to both caster wheels 500, where suitable. In an alternative embodiment, selective drive motor and axis 620 or selective swivel/drive axis 618 can have an adjustable mechanical damper that is partly or wholly independent of power applied to selective drive motor and axis 620. The mechanical damper can resist rotation of caster wheel 500 by mechanical friction in various implementations. Example mechanical friction can include: an adjustable friction on mechanical gears within selective swivel/drive axis 618, an adjustable friction device adjacent to a rotational pin, rod, bearing, *etc.* of selective swivel/drive axis 618 that is configured to apply adjustable mechanical pressure to the rotational pin, rod, bearing, *etc.* to add adjustable friction thereto, or the like.

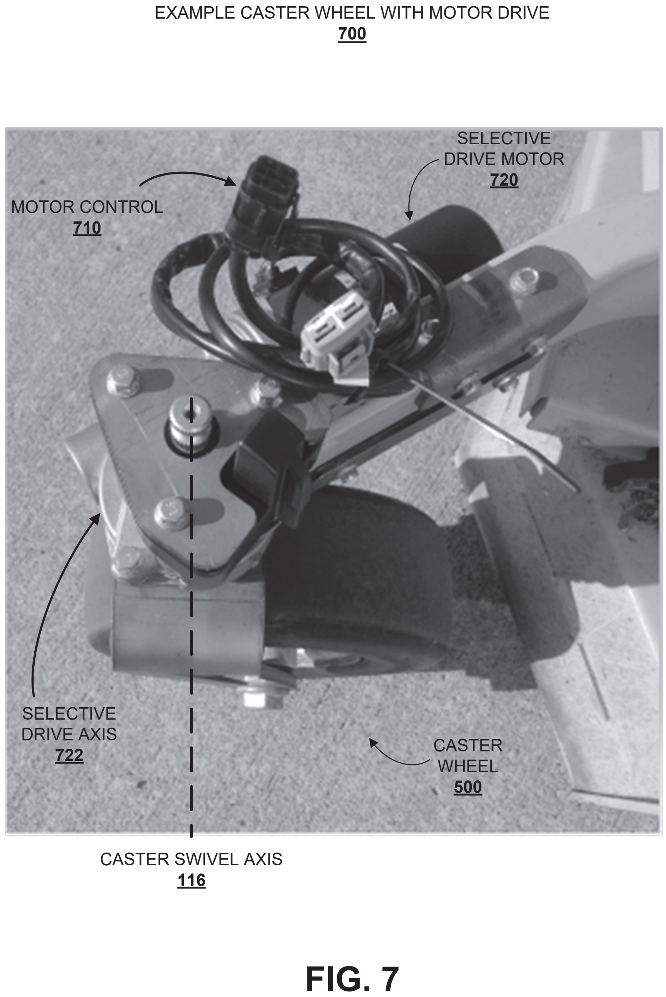

Figure 7 depicts an image of a top view of an example caster wheel with motor drive 700 according to additional embodiments of the present disclosure. A caster wheel 500 is connected to a selective drive axis 722 and can be actively oriented about a caster swivel axis 116 by a selective drive motor 720. In response to a signal provided over a motor control 710, selective drive motor 720 can apply a rotational force to selective drive axis 722 to turn caster wheel 500 about caster swivel axis 116. The signal can also include a direction indication for determining whether to apply the rotational force in a clockwise or counter-clockwise angular direction (looking down from a top of caster swivel axis 116). In an embodiment, selective drive axis 722 can have an inherent axial friction opposing rotation of caster wheel 500 about caster swivel axis 116, whereas in an alternative embodiment selective drive axis 722 can have negligible axial friction. The rotational force applied by selective drive axis 722 can be selected to overcome the axial friction, where present, in addition to turning caster wheel 500 about the caster swivel axis 116.

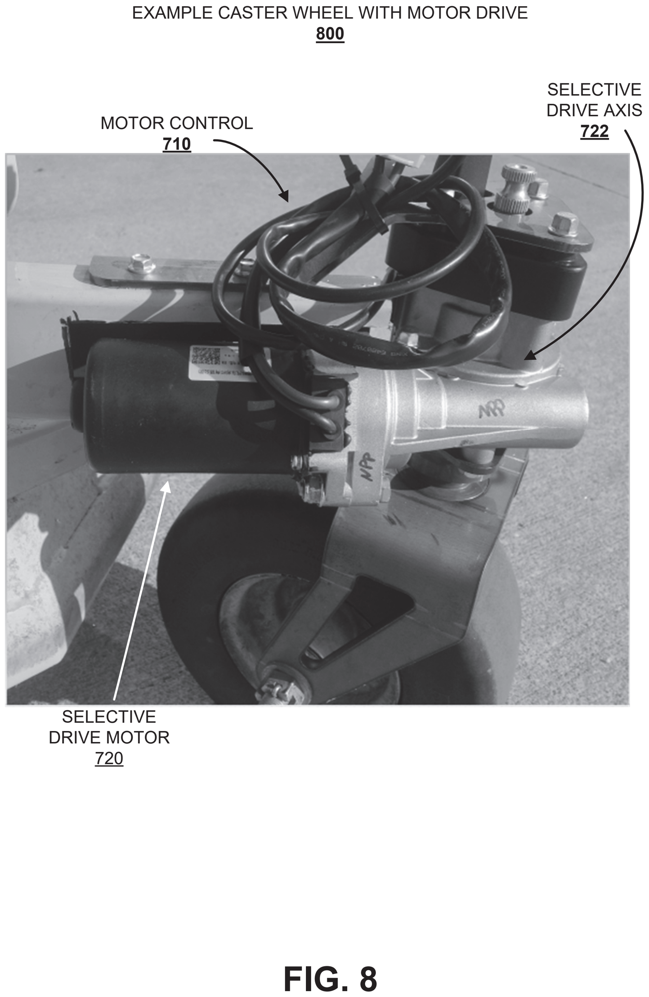

Figure 8 illustrates an image of an example caster wheel with motor drive 800 illustrating additional aspects of disclosed embodiments. Caster wheel with motor drive 800 depicts the caster wheel from an interior of a frame of a maintenance apparatus to which caster wheel with motor drive 800 is secured. A selective drive motor 720 is mounted to the frame having a mechanical torque output located at a selective drive axis 722 of the caster wheel with motor drive 800. The caster wheel is secured to the selective drive axis 722, causing the torque output provided to the selective drive axis 722 to apply a rotational force to the caster wheel. A motor control 710 is connected to selective drive motor 720 to cause the selective drive motor 720 to generate the torque output, and in one or more embodiments, to specify a direction and magnitude of the torque output.

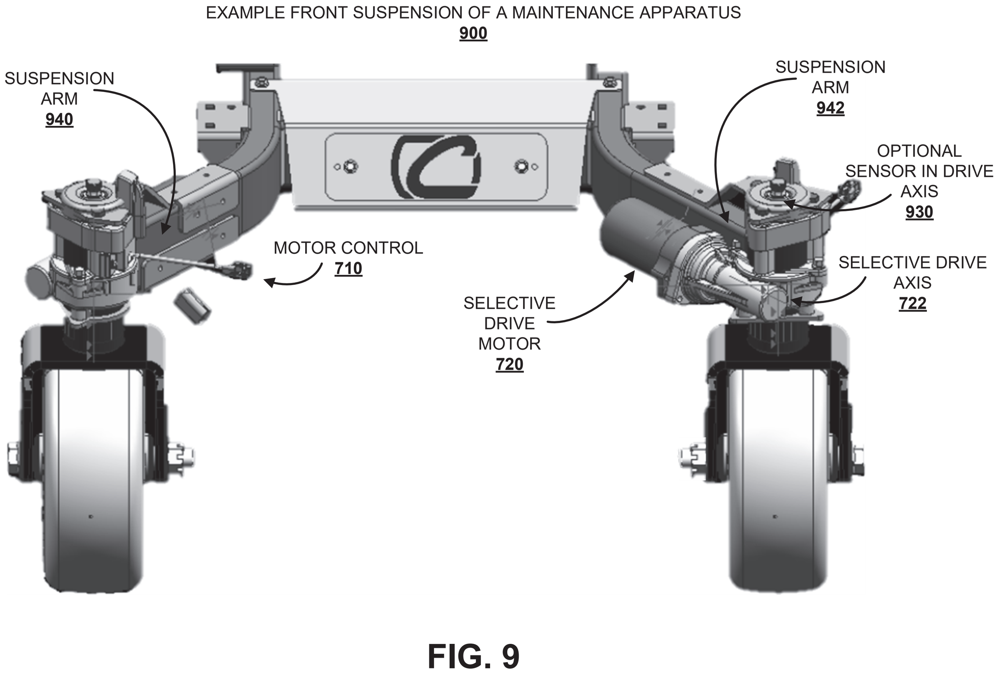

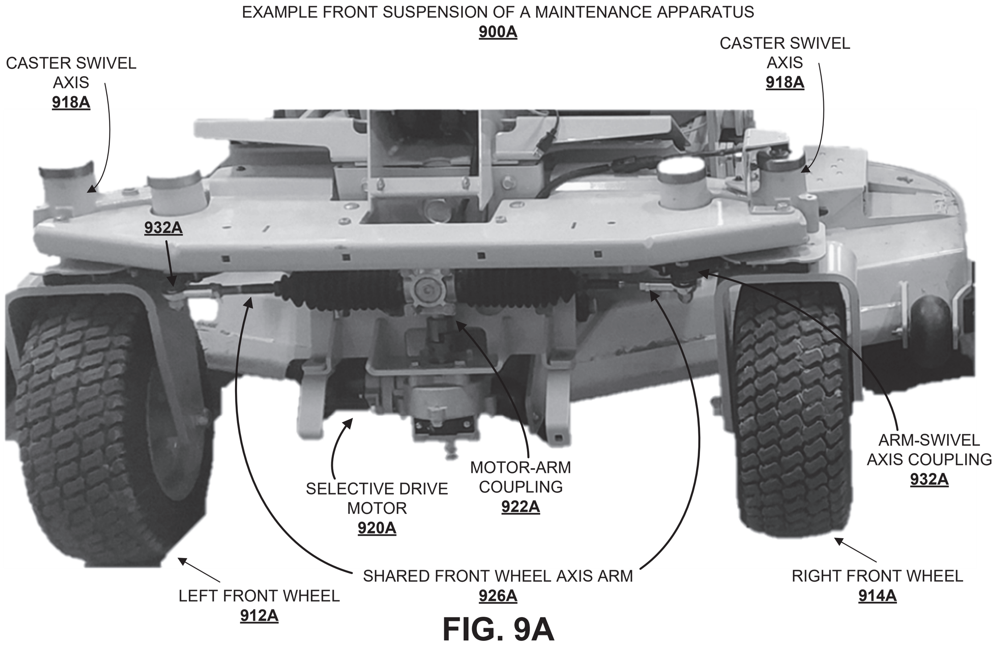

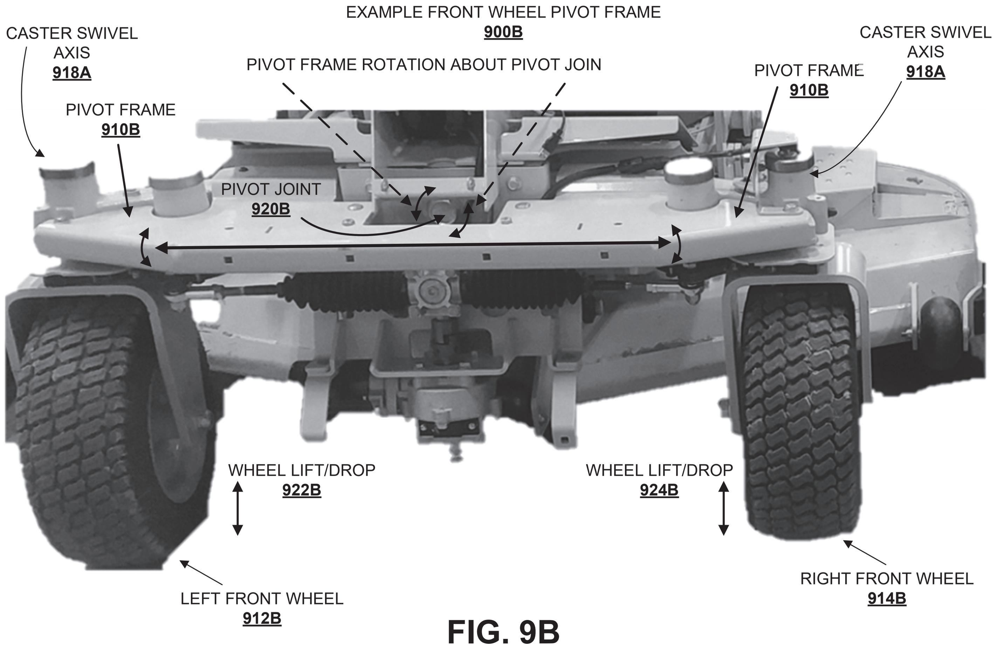

Figure 9 depicts a diagram of an example front suspension 900 of a maintenance apparatus, in additional aspects of the disclosed embodiments. The maintenance apparatus can be a lawn maintenance device, such as a lawn mower, a riding lawn mowing device, a walk-behind lawn mowing device, a remote-controlled lawn mowing device, a partially or fully autonomous and automated lawn mowing device, or the like, or a suitable combination thereof. Front suspension 900 can comprise a first suspension arm 940 and a second suspension arm 942 (referred to collectively as suspension arms 940, 942). A selective drive motor 720 is attached to one side of the second suspension arm 942, and a like selective drive motor is attached to first suspension arm 940. The selective drive motors 720 can be configured to output a torque(s) upon respective selective drive axis 722 of suspension arms 940, 942 to effect rotation of caster wheels connected to suspension arms 940, 942. In various embodiments, a torque applied to the selective drive axis 722 of first suspension arm 940 by a first selective drive motor 720 can be selected to be the same or different magnitude (or direction) from a second torque applied to selective drive axis 722 of second suspension arm 942 by a second selective drive motor 720.

A direction and magnitude of the torque(s) upon the respective selective drive axis 722 can be determined in response to a measurement of torque or force upon the maintenance apparatus. The measurement of torque can be acquired at a PTO clutch or PTO anti-rotation pin of the maintenance apparatus, in an embodiment. The measurement of torque can be a difference in instantaneous torque output by different motors driving respective drive wheels of the maintenance apparatus, in another embodiment. The measurement of force can be a difference in instantaneous power consumption of different motors driving respective drive wheels of the maintenance apparatus, in yet another embodiment. The measurement of torque or force can be a torque or force upon a caster wheel(s) at selective drive axis 722 by an optional sensor in drive axis 930, in yet additional embodiments. In still other embodiments, another measurement of force known in the art or reasonably conveyed to one of ordinary skill in the art by way of the context provided herein, or any suitable combination of the foregoing can be provided.

Figure 9A illustrates an embodiment of a maintenance apparatus 900A with an example front suspension according to additional aspects of the present disclosure. Maintenance apparatus 900A comprises a (single) selective drive motor 920A secured to a front portion of maintenance apparatus 900A. A shared front wheel axis arm 926A provides steering control to a left front wheel 912A and right front wheel 914A in response to drive output from selective drive motor 920A, by way of a motor-arm coupling 922A. Shared front wheel axis arm 926A is mechanically coupled to caster swivel axis 918A of left front wheel 912A and right front wheel 914A by way of arm-swivel axis coupling 932A. Accordingly, in response to activation of selective drive motor 920A shared front wheel axis arm 926A is manipulated to rotate left front wheel 912A and right front wheel 914A about respective caster swivel axis 918A, to effect turning of front wheels 912A and 914A. Moreover, selective drive motor 920A can be responsive to a steering mechanism, such as controls 105 of Figure 1, *supra.* In other aspects, the steering mechanism can be a remote control steering, a drive-by-wire steering control, or an automated (or partially automated) steering control module of an automated steering control device (which can be implemented at least in part utilizing a computer 1102 of Figure 11, *infra,* or like computer-implemented steering module).

Figure 9B illustrates a further embodiment of an example front wheel pivot frame 900B for a maintenance apparatus according to additional embodiments of the present disclosure. Front wheel pivot frame 900B includes pivot frame 910B or pivot bar that provides a stable mechanical link between caster swivel axis 918A connected to left front wheel 912B and right front wheel 914B. Pivot frame 910B can be secured to the maintenance apparatus at least by a pivot joint 920B (though one or more other joints may secure pivot frame 910B to the maintenance apparatus in various embodiments). Pivot joint 920B permits rotation of pivot frame 910B relative to the maintenance apparatus about a rotation axis of pivot joint 920B. This allows left front wheel 912B and right front wheel 914B a degree of movement depicted by wheel lift/drop 922B (for left front wheel 912B) and wheel lift/drop 924B (for right front wheel 924B) in opposing relative directions. For example, as pivot frame 910B rotates counter-clockwise about pivot joint 920B - as depicted - right front wheel 914B lifts upward and left front wheel 912B drops downward. For clockwise rotation about pivot joint 920B, the reverse is true: right front wheel 914B drops downward and left front wheel 912B lifts upward. The relative up-down movement resulting from rotation of pivot frame 910B about pivot joint 920B can allow left front wheel 912B and right front wheel 914B some independence in tracking a surface upon which the maintenance apparatus is moving and maintaining ground contact (or increasing time of ground contact and decreasing time of non-contact) of left front wheel 912B and right front wheel 914B over uneven terrain. In various embodiments, pivot joint 920B can facilitate rotation of a few degrees to several degrees clockwise and counterclockwise about an axis of pivot joint 920B. In some embodiments, one or more bumpers (not depicted) can be mounted to a frame of the maintenance apparatus above or below respective ends of pivot frame 910B to (physically) halt rotation of pivot frame 910B further than the few to several degrees of clockwise or counterclockwise motion about pivot joint 920B. In an embodiment, the few to several degrees of clockwise and counter-clockwise rotation can be zero to five degrees, zero to seven degrees, zero to ten degrees, or the like, or any suitable value or range there between.

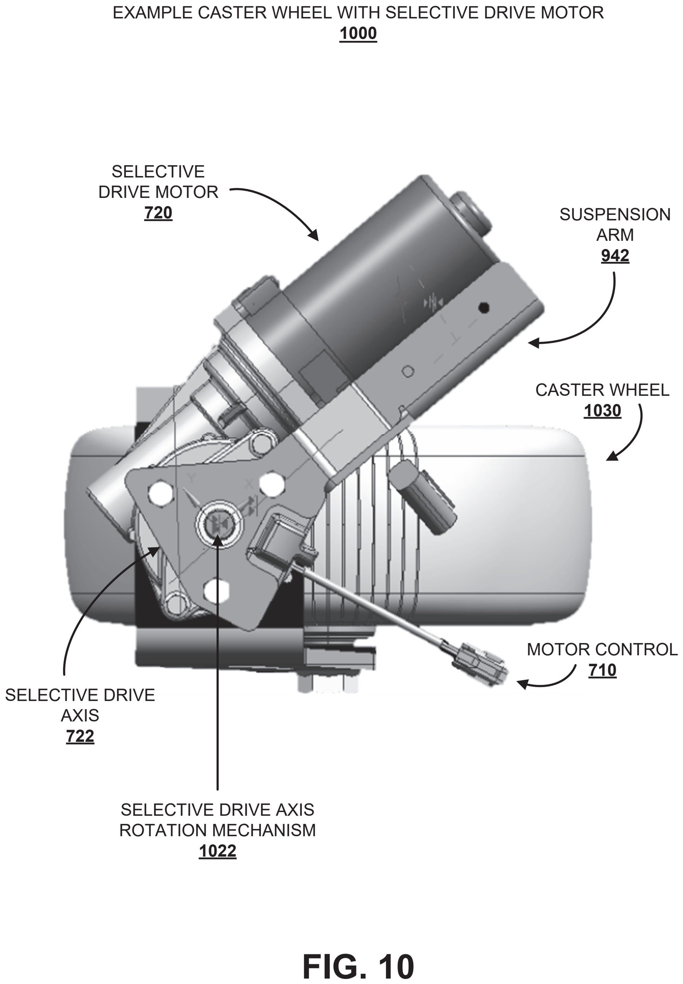

Figure 10 depicts an example caster wheel with selective drive motor 1000 according to still further aspects of embodiments disclosed herein. Figure 10 illustrates a portion of a suspension arm 942 of a maintenance apparatus from an overhead perspective, including caster wheel and selective drive motor 1000 and a selective drive motor 720 secured to the suspension arm 942. Selective drive motor 720 outputs a torque at a selective drive axis 722 in response to a signal from a motor control 710. Additionally, a caster wheel 1030 is mounted to the selective drive axis 722 and is configured to rotate about an axis of rotation of selective drive axis 722. In an aspect of the disclosed embodiment(s), caster wheel 1030 can rotate together with rotation of selective drive axis 722 itself. In another aspect, caster wheel 1030 rotates in part at a different rate from that of selective drive axis 722, or rotates about selective drive axis 722, which remains stationary. Also depicted is a selective drive axis rotational mechanism 1022 facilitating rotation of the caster wheel 1030, and optionally facilitating rotation of selective drive axis 722 as well. Selective drive axis rotation mechanism 1022 can be a lubricated pin, bearing, or other suitable mechanical mechanism facilitating rotation about an axis having negligible friction, in an embodiment. In other embodiments, selective drive axis rotation mechanism 1022 can be an electromechanical device facilitating the driving of rotation of caster wheel 1030 about selective drive axis 722, when selective drive motor 720 is activated, as well as allowing rotation of caster wheel 1030 about selective drive axis 722 in response to friction, gravity or other movement-related forces about selective drive axis 722 when selective drive motor 720 is deactivated. In some aspects of disclosed embodiments, selective drive axis 722 can have an axial friction that is non-negligible providing some resistance to rotation about selective drive axis 722 when selective drive motor 720 is deactivated.

Figure 11 depicts an example diagram of a rotational force 1100 upon a caster wheel 1030 according to various disclosed embodiments. The rotational force 1100 illustrated in Figure 11 pertains to a force in response to movement of caster wheel 1030 in response to a force applied by suspension arm 940 upon caster wheel 1030, such as when a maintenance apparatus including suspension arm 940 is driven by a drive wheel(s), or other motive force. Additionally, the non-powered caster wheel rotational force 1100 ignores any force from selective drive motor 720, and thus can be operable when selective drive motor 720 is deactivated. When activated, selective drive motor 720 can provide an applied rotation force (not depicted) on a selective swivel/drive axis 618 mechanically coupled to caster wheel 1030 in addition to the rotational force 1100, or subtracting from the rotational force 1100 depending upon relative direction of the applied rotation force and rotational force 1100.

The example illustrated by Figure 11 shows caster wheel 1030 having a wheel orientation 1124 as compared with a forward direction 1122 of a maintenance apparatus. Forward direction 1122 is defined by (and in a direction of) a force applied by suspension arm 940 on selective swivel/drive axis 618 and caster wheel 1030 and can also be referred to as a zero angle with respect to wheel orientation 1124 of caster wheel 1030. The force applied by suspension arm 940 causes motion and turning of caster wheel 1030 on a surface, which in turn results in a friction force 1130 having a component in a direction opposite the forward direction 1122. The friction force 1130 causes a rotation force 1132 in response to the friction force 1130, that is proportional to a length of a caster trail 410 of caster wheel 1030 and related to angular displacement 1126. This rotation force 1132 is in a direction that minimizes angular displacement 1126. With angular displacement 1126 as shown in Figure 11, rotation force 1132 is in a counter-clockwise direction (looking at the page of Figure 11). If instead angular displacement 1126 is above the line illustrated by forward direction 1122, rotation force 1132 will be in a clockwise direction (also minimizing angular displacement 1126).

Note that Figure 11 does not illustrate an effect of axial friction of selective swivel/drive axis 618 on rotation force 1132. Where selective swivel/drive axis 618 is a suitably lubricated pin, bearing or other rotational coupling, the effect of the axial friction can be negligible and ignored. In other embodiments, for instance where selective swivel/drive axis 618 is a mechanical or electro-mechanical powered axis, a significant axial friction can affect rotational forces at selective swivel/drive axis 618, including rotation force 1132 responding to friction 1130, an applied force provided by selective drive motor 720 upon selective swivel/drive axis 618, a gravitational force on caster wheel 1030 and suspension arm 940, an inertial force(s) on suspension arm 940 and caster wheel 1030, and so forth. In one or more embodiments, the applied force provided by selective drive motor 720 can be configured to counteract, or to overcome, where suitable, rotation force 1132 on selective swivel/drive axis 618 in addition to other forces acting upon selective swivel/drive axis 618, such as the axial friction, gravitational force, and so forth. In other embodiments, selective drive motor 720 can be configured to apply a force proportional to a sensor measurement *(e.g.,* an optional sensor 930 in selective swivel/drive axis 618, a sensor at a PTO clutch or PTO anti-rotation pin, a relative torque output at hydraulic motors of a maintenance apparatus, a relative power consumption at electric motors of a maintenance apparatus, and so forth) that is in part or in whole independent of rotation force 1132 and other forces upon selective swivel/drive axis 618, where suitable.

Figures 12A and 12B illustrate embodiments of a caster wheel orientation sensor 1200 depicted in a side-view orientation in Figure 12A and an overhead view orientation in Figure 12B. Caster wheel orientation sensor 1200 is embodied, by the example illustrated in Figures 12A and 12B, with a swivel axis orientation sensor 1210 and a sensor mount 1215. It should be appreciated, however, that different shape, style, size and manner of mount 1215 can be utilized as suitable to secure swivel axis orientation sensor 1210 to selective swivel/drive axis 618 in a suitable position to achieve the function of detecting, measuring or monitoring rotational orientation of a caster arm 116 and caster wheel 500 of a disclosed maintenance apparatus. In the example illustrated by Figures 12A and 12B, caster wheel 500 and caster arm 116 can rotate within selective swivel/drive axis 618 by way of a swivel device (*e.g.,* mounting rod 426 of Figure 4, *supra*). Swivel axis orientation sensor can be configured to measure a rotational orientation of the swivel device in order to determine a rotational orientation of caster wheel 500. As one example, a hall effect sensor included within swivel axis orientation sensor 1210 can measure rotational position of a fixed magnet mounted to a top surface of the swivel device (*e.g*., mounting rod 426) to determine a rotational orientation of the swivel device. Sensor wiring 1210 can be provided to power swivel axis orientation sensor 1210, and to transfer data from swivel axis orientation sensor 1210 to a controller, described herein. Data specifying the rotational orientation of the swivel device can be transferred to the controller which can infer a rotational orientation of the caster wheel 500 there from. Accordingly, swivel axis orientation sensor 1210 can facilitate determination of current rotational orientation of caster wheel 500 and enable turning instructions to be generated to turn caster arm 116 by selective drive motor 720 to accomplish turning caster arm 116 from the current rotational orientation to a subsequent rotational orientation. This can facilitate steering a disclosed apparatus by way of caster arm 116 and caster wheel 500, in at least some disclosed embodiments, countering effects of torque or force upon the apparatus that affect orientation of caster arm 116 and caster wheel 500 in still other embodiments, or a combination of the foregoing in still further embodiments.

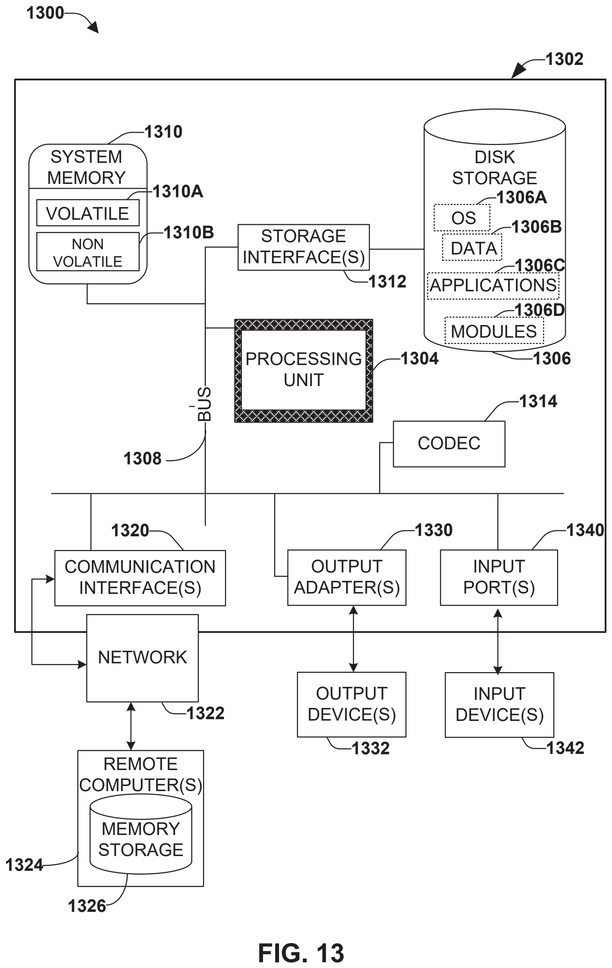

With reference now to the nonlimiting embodiment shown in Figure 13, a disclosed controller can be embodied within hardware, such as a single integrated circuit (IC) chip, multiple ICs, an application specific integrated circuit (ASIC), or the like. A suitable operating environment 1300 for implementing various aspects of the claimed subject matter includes a computer 1302. Computer 1302 can embody a motor drive controller, in some embodiments, and can include only a subset of components identified herein as part of computer 1302 in some embodiments, whereas in other embodiments other components known to one of ordinary skill that are not depicted can nonetheless be included in computer 1302. In alternative or additional embodiments, a control unit of a maintenance apparatus (which can be separate from the above motor drive controller, or combined with such controller) can be embodied in part by computer 1302, or an analogous computing device known in the art, subsequently developed, or made known to one of ordinary skill in the art by way of the context provided herein.

The computer 1302 includes a processing unit 1304, a system memory 1310, a codec 1314, and a system bus 1308. The system bus 1308 couples system components including, but not limited to, the system memory 1310 to the processing unit 1304. The processing unit 1304 can be any of various available processors. Dual microprocessors and other multiprocessor architectures also can be employed as the processing unit 1304.

The system bus 1308 can be any of several types of bus structure(s) including the memory bus or memory controller, a peripheral bus or external bus, or a local bus using any variety of available bus architectures including, but not limited to, Industrial Standard Architecture (ISA), Micro-Channel Architecture (MSA), Extended ISA (EISA), Intelligent Drive Electronics (IDE), VESA Local Bus (VLB), Peripheral Component Interconnect (PCI), Card Bus, Universal Serial Bus (USB), Advanced Graphics Port (AGP), Personal Computer Memory Card International Association bus (PCMCIA), Firewire (IEEE 1394), and Small Computer Systems Interface (SCSI).

The system memory 1310 can include volatile memory 1310A, non-volatile memory 1310B, or both. Functions of a motor drive controller or apparatus control unit described in the present specification can be programmed to system memory 1310, in various embodiments. The basic input/output system (BIOS), containing the basic routines to transfer information between elements within the computer 1302, such as during start-up, is stored in non-volatile memory 1310B. In addition, according to present innovations, codec 1314 may include at least one of an encoder or decoder, wherein the at least one of an encoder or decoder may consist of hardware, software, or a combination of hardware and software. Although, codec 1314 is depicted as a separate component, codec 1314 may be contained within non-volatile memory 1310B. By way of illustration, and not limitation, non-volatile memory 1310B can include read only memory (ROM), programmable ROM (PROM), electrically programmable ROM (EPROM), electrically erasable programmable ROM (EEPROM), or Flash memory. Non-volatile memory 1310B can be embedded memory (e.g., physically integrated with computer 1302 or a mainboard thereof), or removable memory. Examples of suitable removable memory can include a secure digital (SD) card, a compact Flash (CF) card, a universal serial bus (USB) memory stick, or the like. Volatile memory 1310A includes random access memory (RAM), which can act as external cache memory, and can also employ one or more memory architectures known in the art, in various embodiments. By way of illustration and not limitation, RAM is available in many forms such as static RAM (SRAM), dynamic RAM (DRAM), synchronous DRAM (SDRAM), double data rate SDRAM (DDR SDRAM), and enhanced SDRAM (ESDRAM), and so forth.

Computer 1302 may also include removable/non-removable, volatile/non-volatile computer storage medium. Figure 13 illustrates, for example, disk storage 1306. Disk storage 1306 includes, but is not limited to, devices such as a magnetic disk drive, solid state disk (SSD) floppy disk drive, tape drive, Flash memory card, memory stick, or the like. In addition, disk storage 1306 can include storage medium separately or in combination with other storage medium including, but not limited to, an optical disk drive such as a compact disk ROM device (CD-ROM) or derivative technology (e.g., CD-R Drive, CD-RW Drive, DVD-ROM, and so forth). To facilitate connection of the disk storage 1306 to the system bus 1308, a removable or non-removable interface is typically used, such as interface 1312. In one or more embodiments, disk storage 1306 can be limited to solid state non-volatile storage memory, providing motion and vibration resistance for a motor controller, control unit or the like operable in conjunction with a power equipment machine (*e.g*., maintenance apparatus 100).

It is to be appreciated that Figure 13 describes software that can program computer 1302 to operate as an intermediary between an operator of a maintenance apparatus (*e.g.,* maintenance apparatus 100, 200, 300, *etc*.) or a component thereof (*e.g.,* selective drive motor 720), operate as an intermediary between the maintenance apparatus or component and an autonomous control system for operating the maintenance apparatus/component embodied within operating environment 1300, in at least some embodiments. Such software can include an operating system 1306A. Operating system 1306A, which can be stored on disk storage 1306, acts to control and allocate resources of the computer 1302. Applications 1306C take advantage of the management of resources by operating system 1306A through program modules 1306D, and program data 1306B, such as a boot/shutdown transaction table and the like, stored either in system memory 1310 or on disk storage 1306. It is to be appreciated that the claimed subject matter can be implemented with various operating systems or combinations of operating systems.

Input device(s) 1342 connects to the processing unit 1304 and facilitates operator interaction with operating environment 1300 through the system bus 1308 *via* interface port(s) 1330. Input port(s) 1340 can include, for example, a serial port, a parallel port, a game port, a universal serial bus (USB), among others. Output device(s) 1332 can use some of the same type of ports as input device(s) 1342. Thus, for example, a USB port may be used to provide input to computer 1302 and to output information from computer 1302 to an output device 1332. Output adapter 1330 is provided to illustrate that there are some output devices, such as graphic display, speakers, and printers, among other output devices, which require special adapters. The output adapter 1330 can include, by way of illustration and not limitation, video and sound cards that provide a means of connection between the output device 1332 and the system bus 1308. It should be noted that other devices or systems of devices provide both input and output capabilities such as remote computer(s) 1324 and memory storage 1326.

Computer 1302 can operate in conjunction with one or more electronic devices described herein. For instance, computer 1302 can embody a control unit configured to receive and process data from optional sensor 130 and output a selected rotation force and direction to selective drive motor 720. Additionally, computer 1302 can be configured to select a force at selective drive motor 720 that counters a force measured at optional sensor 130 (or measured at another sensor, such as a differential torque output sensor, a differential power consumption sensor, and so forth), or select a force to drive caster arm 116 and wheel 112 to a target direction or angle in response to a steering input of an operator, remote control or (semi-) autonomous control unit, as described in embodiments throughout the disclosure. Computer 1202 can couple with optional sensor 130 (or other sensor(s)) or selective drive motor 720 by way of a network interface 1322 (*e.g*., wired or wireless) in an embodiment.

Communication connection(s) 1320 refers to the hardware/software employed to connect the network interface 1322 to the system bus 1308. While communication connection 1320 is shown for illustrative clarity inside computer 1302, it can also be external to computer 1302. The hardware/software necessary for connection to the network interface 1322 includes, for exemplary purposes only, internal and external technologies such as, modems including regular telephone grade modems, cable modems and DSL modems, ISDN adapters, and wired and wireless Ethernet cards, hubs, and routers.

It should be further understood that a part-time automatic active caster drive could be established by adding a take-off line at each of the first hydraulic drive motor 1413 and the second hydraulic drive motor 1415 to produce an output hydraulic from the drive motors to a hydraulic motor on the caster and thereby turn casters in a proportional response to the torque differential at the drive motors.

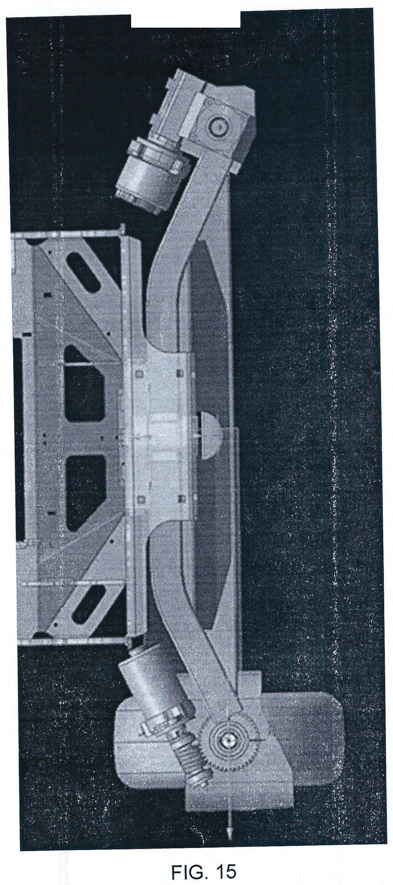

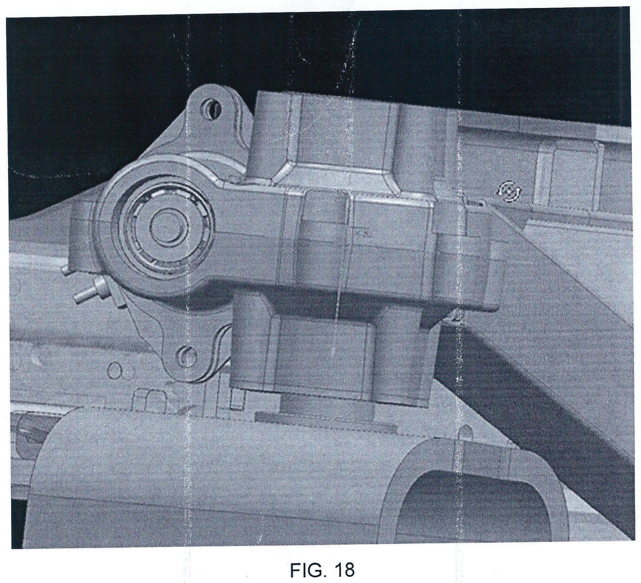

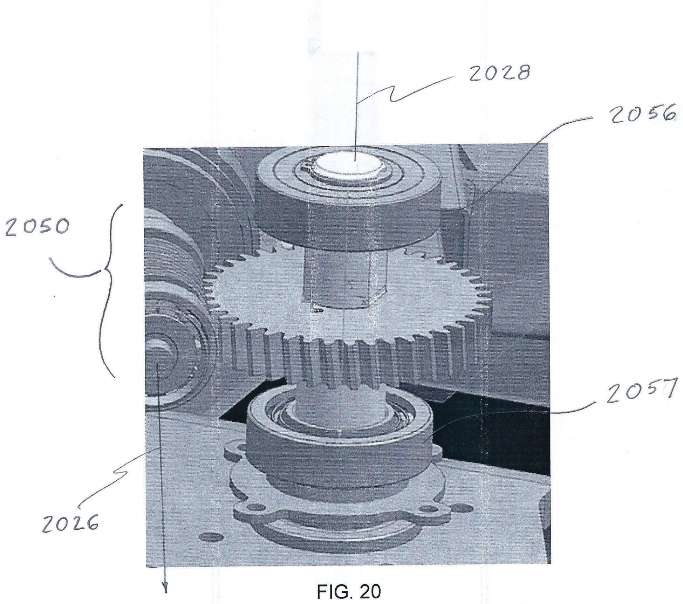

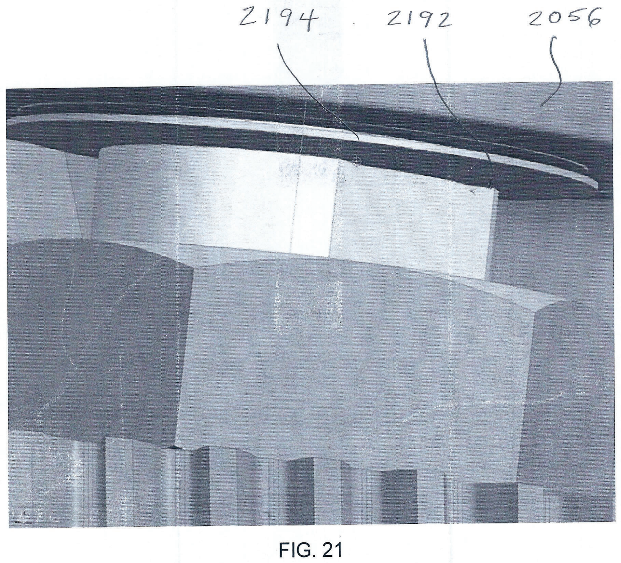

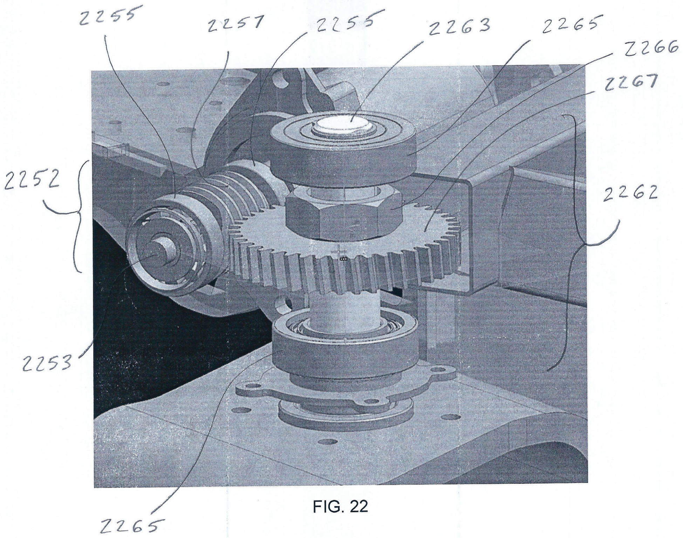

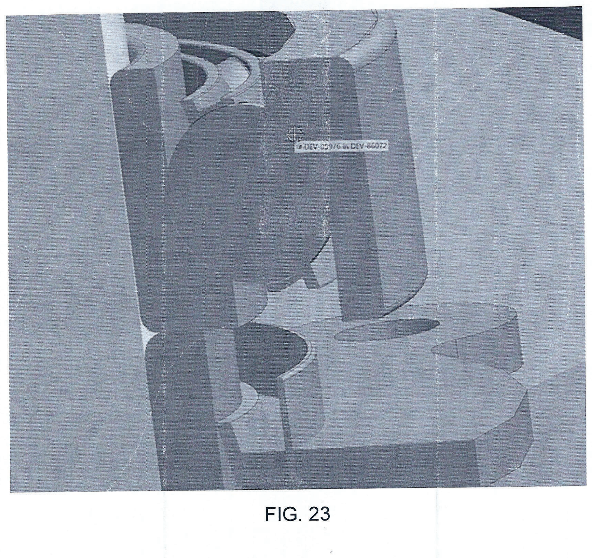

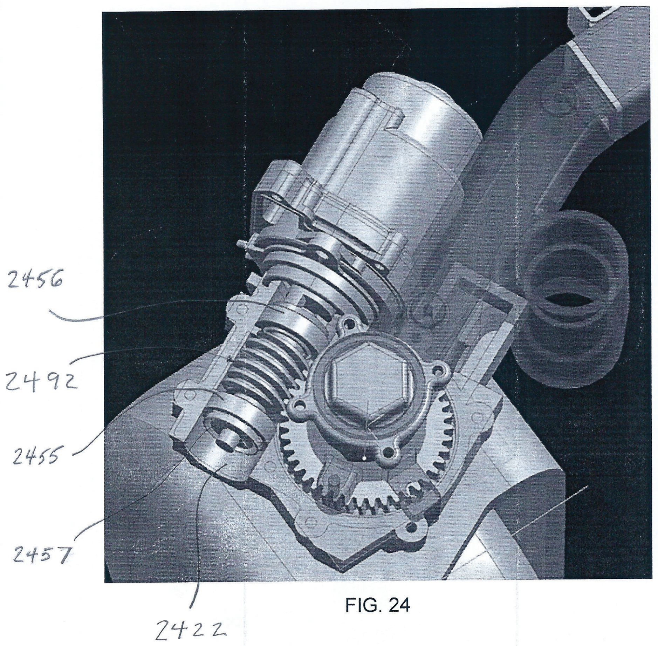

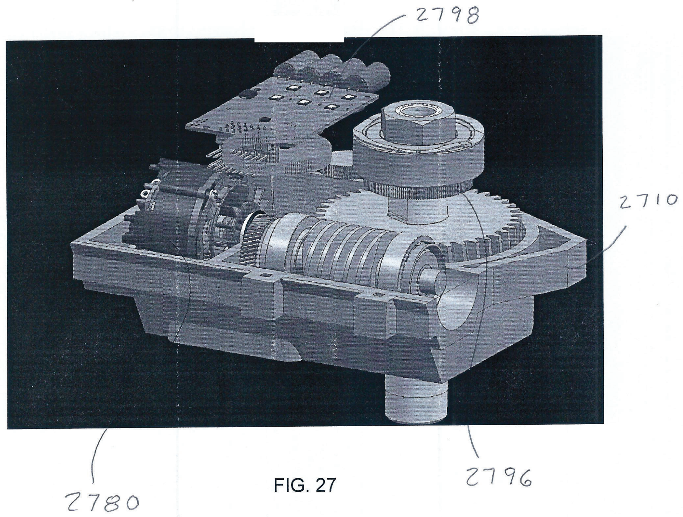

Referring now to Figs. 15-28 shown are particular aspects of caster wheel selective drive apparatuses for use on an associated lawn maintenance apparatus, or utility vehicle. Figs. 15-26 show various views of a first embodiment of a motor and gearbox for an actively driven caster wheel. Figs. 27-28 show various views of a second embodiment of a motor and gearbox for an actively driven caster wheel.

Referring now particularly to Figs. 15-26, the first embodiment of a motor and gearbox for an actively driven caster wheel is a gearbox 1710 operatively engaged with an associated motor 1780 and also operatively engaged with an associated caster wheel 1790. The gearbox 1710 comprises a housing 1720 and a transmission 2050.

The housing 1720 defines a set of operational surfaces 2422 adapted to operationally engage transmission 2050. As will be detailed further herebelow, this latter operationally engagement holds the components of the transmission fixed in location (relative to the set of operational surfaces 2422) while permitting the components of the transmission to rotate and otherwise change in orientation in a manner consistent with functionality to transmit work. In some embodiments, the set of operational surfaces 2422 are identical to their own mirror image. That the set of operational surfaces 2422 are identical to their own mirror image is of interest for multiple reasons including that the same set of operational surfaces 2422 (and by extension the same housing 1720) may be used in both a right hand location on a lawn maintenance apparatus or utility vehicle as well as a left hand location, opposite the right hand location as shown in Fig. 15, by flipping it over. It is worth noting that while some sets of trivial geometries match their own mirror images, e.g. a sphere, cube, octahedron, icosahedron, etc., the set of operational surfaces 2422 are also adapted to operationally engage the transmission 2050, which in some non-limiting embodiments includes transmissions which are cross axis transmissions, and thus may be substantially more complex than the latter trivial geometries. The set of operational surfaces 1722 has an input shaft engagement aperture 1724 elongated to define an input axis 2026, and an output shaft engagement aperture 1732 elongated to define an output axis 2028.

The transmission 2050 may be operatively engaged with the operational surfaces 2422 of the housing 1729. The transmission 2050 may comprise an input shaft assembly 2252 and an output shaft assembly 2262. The input shaft assembly 2252 may have an elongated input shaft 2253, a set of input bearings 2255, an input gear 2257 engaged with the input shaft 2253. The output shaft assembly 2262 may have an elongated output shaft 2263, a set of output bearings 2265, an output gear 2267 engaged with the output shaft 2263.

The input shaft assembly 2252 is installed in the input shaft engagement aperture 1724 such that the input gear 2257 is adapted to rotate about the input axis 2026 during operation. The output shaft assembly 2262 is installed in the output shaft engagement aperture 1732 such that the output gear 2267 is adapted to rotate about the output axis 2028 during operation. The input gear 2257 is operationally engaged with the output gear 2267 such that mechanical work is transmitted therebetween during operation of the transmission 2050.

The transmission 2050 may provide some mechanical advantage. The mechanical advantage of transmission 2050 may range between 1:1 and 80:1; between 5:1 and 150:1; between 10:1 and 40:1; between 18:1 and 25:1; or otherwise as chosen with good engineering judgment.

In the embodiment shown in Figs. 12-26, the transmission 2050 is a cross axis helical transmission using a worm gear as the input gear 2257 and a helical gear as the output gear 2267 but this is not limiting and other configurations and embodiments are contemplated including transmissions wherein either the input gear 2257 or the output gear 2267 or both are a hypoid gear, a bevel gear, an enveloping worm gear and bevel gear, or otherwise as chosen with good engineering judgment.

In those embodiments in which the input gear 2257 is a worm gear and the output gear 2267 is a helical gear, the worm gear will have some defined lead angle 2492 and the lead angle 2492 will have a tangent. Further, as in any real mechanical transmission, there will be some coefficient of friction between the input gear 2257 and the output gear 2267. In those embodiments in which the input gear 2257 is a worm gear and the output gear 2267 is a helical gear, and in which the coefficient of friction between the input gear 2257 and the output gear 2267 is greater than or equal to the tangent of the lead angle 2292, the transmission will be self-locking such that the output gear 2267 may not be turned to drive the input gear 2257. In those embodiments in which the input gear 2257 is a worm gear and the output gear 2267 is a helical gear, and in which the coefficient of friction between the input gear 2257 and the output gear 2267 is less than the tangent of the lead angle 2292, the transmission will not be self-locking such that the output gear 2267 may be turned to drive the input gear 2257. In some instances of the latter not self-locking embodiments, the coefficient of friction between the helical gear and the worm gear is between 90% and 99% of the tangent of the lead angle of the worm gear such that the performance is almost, but not quite, self-locking which may provide some advantages to dampen unwanted impulses, such as, and without limitation, impact from hitting an obstacle with an associated caster wheel 1790, while still permitting the transmission to be back-driven. Where the transmission is not self-locking, it may be back-driven such that it may be manually adjusted from the output side, such as by turning an associated caster wheel 1790 by hand.

With continued reference to Figs. 15-26, as noted above, in some embodiments of gearbox 1710, the set of operational surfaces 2422 are identical to their own mirror image. In embodiments wherein the set of operational surfaces 2422 are identical to their own mirror image, by selecting, component of the transmission with care, an identically formed housing 1710 can be used on the right side and the left side of a utility vehicle: use of different housings may be avoided thereby avoiding separate parts and manufacturing and quality control.

In some embodiments of gearbox 1710, including embodiments wherein the set of operational surfaces 2422 are identical to their own mirror image, such as, but not limited to, the latter described embodiment, the input shaft assembly 2252 can be reversed along the input axis 2026 and installed in the input shaft engagement aperture 1724 such that it is adapted to rotate about the input axis 2026. In some such embodiments, the input bearings 2255 may each have the same outer geometry, diameter, thickness, etc., so that they may be switched with one another, e.g. when the input shaft assembly 2252 is reversed along the input axis 2026, and still be operationally installed in the input shaft engagement aperture 1724. In some embodiments in which the input shaft assembly can be reversed along the input axis, the gearbox has an input gear 2257 that is a worm gear wherein the worm gear is fixed in location on the input shaft 2253 by the input bearings 2255 that comprise a first tapered roller bearing 2455 at a first end of the worm gear and a second tapered roller bearing 2456 at a second end of the worm gear with the first tapered roller bearing 2455 and the second tapered roller bearing 2456 tightened together by a bearing nut 2457. In some embodiments, the bearing nut 2457 tightens the first tapered roller bearing 2455 and the second tapered roller bearing 2456 tightened together sufficiently that the worm gear therebetween has zero lash or substantially zero lash with respect to the input shaft 2253.

In some embodiments of gearbox 1710, including embodiments wherein the set of operational surfaces 2422 are identical to their own mirror image, such as but not limited to the latter described embodiment, the transmission 2050 has an output shaft 2263 that may be held in location by the set of output bearings 2265. In some embodiments, the set of output bearings 2265 comprises a first angular contact bearing 2056 and a second angular contact bearing 2057. In some such embodiments, output shaft 2263 may be stepped to provide an output shaft shoulder 2192 facing the first angular contact bearing 2056. In some embodiments in which there is an output shaft shoulder 2192 facing the first angular contact bearing 2056, the output shaft shoulder 2192 and the first angular contact bearing 2056 are loaded by a spring 2194 therebetween. In some embodiments, spring 2194 may be a disc spring, such as a Belleville spring washer, but other springs chosen with good engineering judgment are also contemplated.

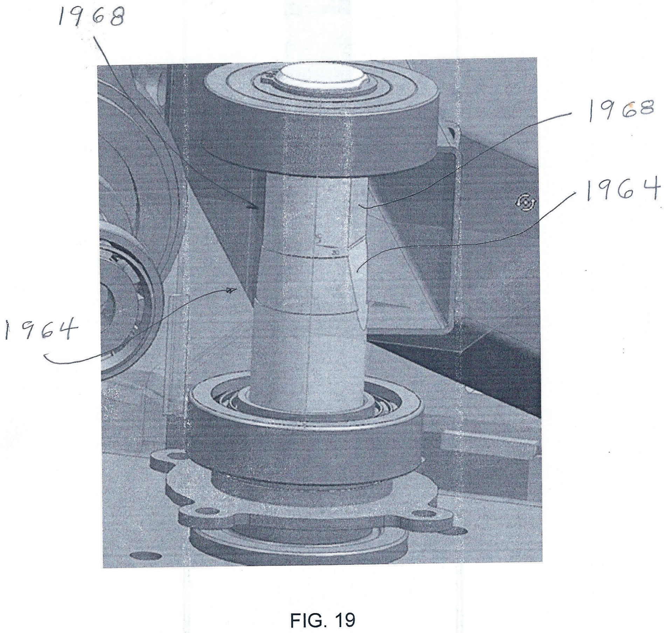

In some embodiments of gearbox 1710, including embodiments wherein the set of operational surfaces 2422 are identical to their own mirror image, such as but not limited to the latter described embodiment, the output shaft 2263 has at least one tapered flat region 1964 that tapers axially. In some aspects of the latter embodiment, the output gear is fixed in location on the tapered flat region of the output shaft by a nut 2266. With specific reference now, to Fig. 19, the shaft 2263 may have a pair of tapered flat regions 1964 and may also have one or more non- tapering flat regions 1968. With the nut 2266 threaded onto the output shaft 2263 and loading the output gear 2267 axially on the tapered flat region 1964, the output gear 2267 is securely fixed in located on the tapered flat region 1964 thereby, and as a consequence the output gear 2267 is fixed in location with respect to the output shaft 2263 with very little or no lash with respect thereto. In some embodiments, the total backlash at the output shaft 2263 is less than 1 degree or less than 0.7 degrees, or less than 0.5 degrees.

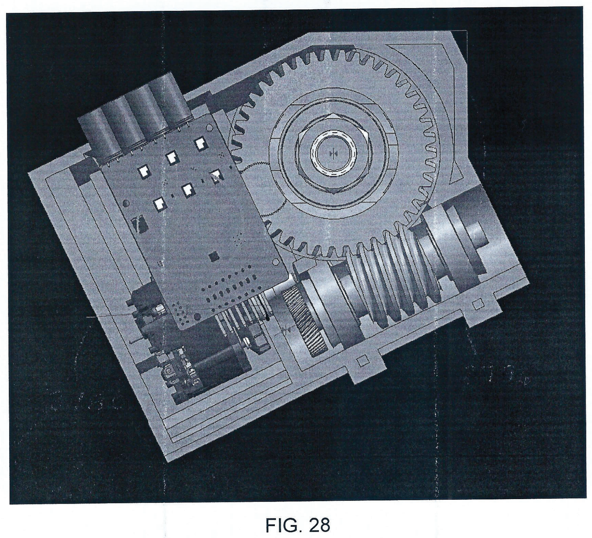

With reference now to Figs. 27 and 28, shown in another embodiment of a gearbox 2710. In the depictions of the second embodiment, shown is a motor 2780 housed within the gearbox 2710 and operationally engaged with the input shaft 2253 to transmit work thereto. Also depicted in Figs 27 and 28 is an encoder 2796 operationally engaged with output shaft 2263 to output a signal indicative of the angular position of the output shaft 2263. The signal output from the encoder 2796 may be received by the control board 2798 as part of a process to determine the control to provide to the motor 2780 to determine the direction and work to output from the motor 2780. The gearbox 2710 may fully enclose the motor 2780, the transmission, the encoder 2796, and the control board 2798. In some embodiments the gear box 2710 may be partially or fully filled with oil to lubricate and cool some or all of the components contained therein including the control board 2798.

Further to the above and with continuing reference to Figs. 15-26, the above apparatus may be used in a method of using a gearbox for an actively driven caster wheel system. The method of using a gearbox for an actively driven caster wheel system may comprise, providing a gearbox 1710 for an actively driven caster wheel system as disclosed above and with any of the features disclosed above. The method may further comprise, operationally engaging a motor 1780 to the input shaft 2253 of the gearbox 1710; operationally engaging a steering axis 1792 of a caster wheel 1790 to the output shaft 2263 of the gearbox 1710; transmitting work from the motor 1780 to the input 2253 shaft of the gearbox 1710; and transmitting work from the output shaft 2263 of the gearbox 1710 to the steering axis 1792 of the caster wheel 1790 to steer the caster wheel 1790. It should be noted that in the embodiment depicted in Fig. 15-26, the steering axis 1792 of the caster wheel is coincident with the output axis 2028. In the embodiment depicted in Fig. 15-26, the output shaft is identical with the steering axis 1792 of the caster wheel, and forms the shaft about which the caster wheel 1790 steers, but this is not limiting, and other aspects in which the steering axis 1792 of the caster wheel is defined by a separate shaft are contemplated as are aspects in which the steering axis 1792 is not coincident with the output axis 2028.

In regard to the various functions performed by the above described components, machines, apparatuses, devices, processes, control operations and the like, the terms (including a reference to a "means") used to describe such components, *etc.,* are intended to correspond, unless otherwise indicated, to any component which performs the specified function of the described component (*e.g*., a functional equivalent), even though not structurally equivalent to the disclosed structure, which performs the function in the herein illustrated exemplary aspects of the embodiments. In this regard, it will also be recognized that the embodiments include a system as well as mechanical structures, mechanical drives, electronic or electro-mechanical drive controllers, and electronic hardware configured to implement the functions, or a computer-readable medium having computer-executable instructions for performing the acts or events of the various processes or control operations described herein.

In addition, while a particular feature may have been disclosed with respect to only one of several implementations, such feature may be combined with one or more other features of the other implementations as may be desired and advantageous for any given or particular application. Furthermore, to the extent that the terms "includes," and "including" and variants thereof are used in either the detailed description or the claims, these terms are intended to be inclusive in a manner similar to the term "comprising."

As used in this application, the term "or" is intended to mean an inclusive "or" rather than an exclusive "or". That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. In addition, the articles "a" and "an" as used in this application and the appended claims should generally be construed to mean "one or more" unless specified otherwise or clear from context to be directed to a singular form.

In other embodiments, combinations or sub-combinations of the above disclosed embodiments can be advantageously made. Moreover, embodiments described in a particular drawing or group of drawings should not be construed as being limited to those illustrations. Rather, any suitable combination or subset of elements from one drawing(s) can be applied to other embodiments in other drawings where suitable to one of ordinary skill in the art to accomplish objectives disclosed herein, objectives known in the art, or objectives and operation reasonably conveyed to one of ordinary skill in the art by way of the context provided in this specification. Where utilized, block diagrams of the disclosed embodiments or flow charts are grouped for ease of understanding. However, it should be understood that combinations of blocks, additions of new blocks, re-arrangement of blocks, and the like are contemplated in alternative embodiments of the present disclosure.

Based on the foregoing it should be understood that the examples and embodiments described herein are for illustrative purposes only and that various modifications or changes in light thereof falling within the scope of the appended claims will be suggested to persons skilled in the art.

## Claims

1. A gearbox for an actively driven caster wheel system, comprising:
a housing defining a set of operational surfaces, the set of operational surfaces:
being identical to its own mirror image,
having an input shaft engagement aperture elongated to define an input axis, and
having an output shaft engagement aperture elongated to define an output axis;
a transmission operationally engaged with the operational surfaces of the housing, the transmission having:
an input shaft assembly having:
an elongated input shaft,
a set of input shaft bearings, and
an input gear engaged with the input shaft, and
an output shaft assembly having:
an elongated output shaft,
a set of output shaft bearings, and
an output gear engaged with the output shaft; and
wherein the input shaft assembly is installed in the input shaft engagement aperture such that the input gear is adapted to rotate about the input axis during operation;
wherein the output shaft assembly is installed in the output shaft engagement aperture such that the output gear is adapted to rotate about the output axis during operation; and
wherein the input gear is operationally engaged with the output gear such that mechanical work is transmitted therebetween during operation.

2. The gearbox of claim 1, wherein the transmission comprises a cross axis helical transmission, or enveloping worm gears, or bevel gears.

3. The gearbox of claim 2, wherein the input gear is a worm gear, and the output gear is a helical gear.

4. The gearbox of claim 3,
wherein the worm gear has a lead angle, and the lead angle has a tangent;
wherein there is a coefficient of friction between the helical gear and the worm gear; and
wherein the coefficient of friction between the helical gear and the worm gear is between 90% and 99% of the tangent of the lead angle of the worm gear.

5. The gearbox of claim 4, wherein the transmission has a mechanical advantage between 5:1 and 150:1.

6. The gearbox of claim 5, wherein the input shaft assembly can be reversed along the input axis and installed in the input shaft engagement aperture such that it is adapted to rotate about the input axis.

7. The gearbox of claim 6,
wherein the worm gear is fixed in location on the input shaft by the set of input bearings;
wherein the set of input bearings comprises a first tapered roller bearing at a first end of the worm gear and a second tapered roller bearing at a second end of the worm gear; and
wherein the set of input beatings are tightened together by a bearing nut on the input shaft such that there is zero lash between the worm gear and the input shaft.

8. The gearbox of claim 7,
wherein the output shaft is stepped to provide a shoulder;
wherein the output shaft is held in location by the set of output bearings;
wherein the set of output bearings comprises a first angular contact bearing and a second angular contact bearing; and
wherein the output shaft shoulder and the first angular contact bearing are loaded by a spring therebetween.

9. The gearbox of claim 8,
wherein the output shaft has at least one tapered flat region that tapers axially;
wherein the helical gear is fixed in location on the tapered flat region of the output shaft by a nut.

10. The gearbox of claim 9, wherein total backlash at the output shaft is less than 1 degree.

11. An actively driven caster wheel system, comprising:
the gear box of any one of the preceding claims;
an electric motor operationally engaged with the input shaft such that mechanical work may be transmitted therebetween; and
a caster wheel assembly having a steer axis, the steer axis being operationally engaged with the output shaft of such that the steer axis is coaxial with the output shaft, and mechanical work may be transmitted between the steer axis and the output shaft.

12. The actively driven caster wheel system of claim 11, further comprising an encoder operationally engaged with the output shaft and adapted to output a signal representative of the angular position of the output shaft.
